(19) Europäisches Patentamt
European Patent Office
Office européen des brevets

(11) EP 4 269 520 A1

(12) **EUROPEAN PATENT APPLICATION**

(43) Date of publication:
**01.11.2023 Bulletin 2023/44**

(21) Application number: **22170305.1**

(22) Date of filing: **27.04.2022**

(51) International Patent Classification (IPC):
***C09J 7/21*** *(2018.01)*

(52) Cooperative Patent Classification (CPC):
(C-Sets available)
**C09J 7/21; C08F 220/1804; C09D 133/066; C09D 133/08; C09J 7/385; C09J 133/066; C09J 133/08;** C09J 2203/302; C09J 2301/312; C09J 2400/263; C09J 2433/00 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **tesa SE**
**22848 Norderstedt (DE)**

(72) Inventors:
- **SCHMITZ-STAPELA, Daniel**
  **22848 Norderstedt (DE)**
- **STOLZE, Janika**
  **22848 Norderstedt (DE)**
- **HÄNLE, Mark**
  **22848 Norderstedt (DE)**
- **KAHRS, Christoph**
  **22848 Norderstedt (DE)**
- **BROCKMEYER, Fabian**
  **22848 Norderstedt (DE)**

(74) Representative: **tesa SE**
**Hugo-Kirchberg-Straße 1**
**22848 Norderstedt (DE)**

(54) **ADHESIVE TAPE FOR JACKETING ELONGATE ITEMS SUCH AS ESPECIALLY CABLE HARNESSES AND METHOD FOR JACKETING**

(57) Adhesive tape in particular for wrapping cables, consisting of a preferably textile carrier and of a pressure sensitive adhesive, applied on at least one side of the carrier, in the form of a dried polymer dispersion, the polymer being obtained by emulsion polymerization of a monomer mixture comprising: (a) 80.75 to 94.89 wt.-%, preferably 83.85 to 93.73 wt.-% of one or more than one (meth)acrylic monomer(s) that individually yield(s) a homopolymer having a glass transition temperature ($T_g$) of -40 °C or less (b) 5.00 to 14.00 wt.-%, preferably 6.00 to 12.00 wt.-% of one or more than one ethylenically unsaturated monomer(s) that individually yield(s) a homopolymer having a $T_g$ of 15 °C or higher (c) 0.10 to 5.00 wt.-%, preferably 0.20 to 4.00 wt.-% of one or more than one ethylenically unsaturated monomer(s) having an acid and/or a hydroxyl functional group (d)0.01 to 0.25 wt.-%, preferably 0.07 to 0.15 wt.-% of a chain transfer agent wherein monomers (a) to (d) are different from each other and the weight percentages is based on the total amount of monomers in the monomer mixture, wherein the pressure sensitive adhesive dispersion polymer has a tanDelta maximum within a temperature range between -25 °C and -15 °C and a tanDelta value at 130 °C between 0.38 and 0.55, wherein the tanDelta is determined by Dynamic Mechanical Analysis (DMA) at an angular frequency of 10 rad/s using a parallel plate tool and the pressure sensitive adhesive comprises 0.00 to 10.00, preferably 2.00 to 7.50 parts by weight of tackifiers (relative to 100 parts by weight of the pressure sensitive adhesive dispersion polymer).

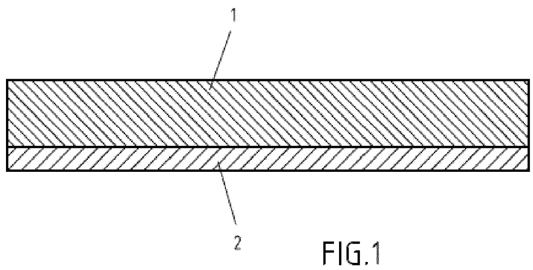

FIG.1

EP 4 269 520 A1

(52) Cooperative Patent Classification (CPC): (Cont.)

C-Sets
**C08F 220/1804, C08F 220/14, C08F 220/20,**
**C08F 220/06**

## Description

The invention pertains to an adhesive tape for jacketing elongate items such as more particularly cable harnesses in motor vehicles, and to methods for jacketing.

Adhesive tapes have been used for a considerable time in the industry for producing cable looms. The adhesive tapes are employed in order to bundle a multiplicity of electrical leads prior to installation or in the as-installed state, in order for example to reduce, by bandaging, the space taken up by the bundle of leads, and also, in addition, to obtain protective functions such as protection against mechanical and/or thermal stresses.

Common forms of adhesive tapes encompass film or textile backings, which in general have a coating of pressure sensitive adhesives on one side. Adhesive tapes for jacketing elongate items are known from, for example, EP 1 848 006 A2, DE 10 2013 213 726 A1 and EP 2 497 805 A1.

The testing and classifying of adhesive tapes for cable jacketing is accomplished in the motor vehicle industry according to extensive bodies of standards, such as, for example, LV 312-1 "Protective systems for wire harnesses in motor vehicles, adhesive tapes; Test Guideline" (10/2009), as a joint standard of the companies Daimler, Audi, BMW and Volkswagen, or the Ford specification ES-XU5T-1A303-aa (Revised version 09/2009) "Harness Tape Performance Specification". Below, these standards are referred to in abbreviated form as LV 312 and Ford specification, respectively.

Noise suppression, abrasion resistance and also the temperature stability of an adhesive tape are determined on the basis of defined test constructions and test methods, as described comprehensively in LV 312.

Cable wrapping tapes with film carriers and textile carriers are widespread and are generally coated on one side with various pressure sensitive adhesives.

As well as a range of requirements, such as chemical compatibility, high peel adhesion, compatibility with varying substrates, that are imposed on adhesive tapes, it must also be ensured in the motor vehicle industry that uneven, non-uniform substrates are reliably bonded by the cable runs, convoluted tubes and branches. Other factors are flexural and tension stresses in the course of production, installation and subsequent use within the engine compartment of a motor vehicle, or else in the vehicle body, with continual flexural stress during opening of doors.

Since the end of the adhesive tape is ideally bonded to its own reverse face, there must be good instantaneous peel adhesion (tack) to this substrate, so that flagging of the adhesive tape does not occur at the start. In order to ensure a flagging-free product durably, the anchoring on the substrate and the internal strength of the adhesive must both be such that the adhesive bond is robust even under the effect of tension (tensile and flexural stressing).

In the wrapping of a cable loom, the adhesive tape is bonded with from no overlap at all to complete overlap around the cable, the radius of which is generally small, meaning that the adhesive tape is very sharply curved. At the end of a wrapped section, the tape is typically wrapped primarily onto its own reverse face, so that the degree of overlapping is virtually complete, similar to the customary presentation form of an adhesive tape roll, where the adhesive is likewise bonded to its own reverse face. In the event of flagging, static forces act, for example, through the flexural stiffness of the carrier and the wrapping tension and may result in the open ends of adhesive tape standing up undesirably, similar to the start of automatic unwinding. The flagging resistance, then, is the capacity of the adhesive to resist this static force.

Flagging, in the case of an adhesive tape wound around a body, means the tendency of one end of the adhesive tape to stick up. The cause is the combination of holding power by the adhesive, the stiffness of the carrier, and the diameter of the cable loom.

Demonstrating the flagging resistance of Wire Harnessing (WH) cable wrapping tapes is done via the TFT method (Threshold Flagging Time) as well as the SWAT method (Single Wire Application Test) as explained below.

The adhesive tape is to protect the leads from damage by abrasion at sharp edges, for example. Accordingly, carrier materials used in particular have an appropriate robustness. The adhesive tapes are therefore classed, in accordance with LV 312, into abrasion classes A to G.

The cable insulation must not become brittle as a result of the effect of the adhesive tape in combination with elevated temperature over a prolonged period. A distinction is made here, inter alia, in accordance with LV 312, between four temperature classes T1 to T4, corresponding to 80 °C (also called temperature class A), 105 °C (also called temperature class B(105)), 125 °C (also called temperature class C) and 150 °C (also called temperature class D), which the wrapped cables are required to withstand for 3000 h without embrittlement. It is self-evident that temperature classes T3 and T4 place higher demands on the adhesive tape than the lower classes T1 and T2. Allocation to T1 to T4 is decided not only by the cable insulation material but also by pressure sensitive adhesive and type of carrier.

Cable wrapping tapes with pressure sensitive adhesives based on natural rubber usually exhibit good flagging resistance but have an unwind force which increases over the storage time, and particularly so in the case of increasing temperatures. Furthermore, they meet only the lower temperature classes for cable compatibility.

Similar behaviour is displayed by adhesive tapes based on synthetic rubbers (styrene block copolymers) such as SBS/SIS. Even the hydrogenated products are limited in their temperature class.

Moreover, there are cable wrapping tapes with pressure sensitive adhesives based on UV-crosslinkable polyacrylic esters. These do meet the high temperature classes but display a propensity to flagging.

The realization of adhesive tapes (for cable bandaging) that are easy to unwind while at the same time retaining good technical adhesive properties poses a major challenge, since the two properties appear to be mutually exclusive - the essential criteria in the case of single-sidedly bonding cable wrapping tapes, namely adapted unwind force and sufficiently high peel adhesion, go very much against one another. While good peel adhesion values and an associated low flagging potential require good adaptation and anchoring behaviour on the part of the pressure sensitive adhesive, these criteria tend to be a hindrance to trouble-free unwind performance.

It is an object of the present invention to provide an adhesive tape which in spite of easy unwind ability has good flagging resistance and at the same time exhibits good cable compatibility and which allows the particularly simple, inexpensive and rapid jacketing of elongate items such as cable harnesses in motor vehicles.

This object is achieved by means of an adhesive tape as recorded in the main claim. Dependent claims provide advantageous developments of the adhesive tape and methods for employing the adhesive tape.

The invention relates accordingly to an adhesive tape more particularly for wrapping cables, composed of a preferably textile carrier and of a pressure sensitive adhesive, applied on at least one side of the carrier, in the form of a dried polymer dispersion, the polymer being obtained by emulsion polymerization of a monomer mixture comprising:

(a) 80.75 to 94.89 wt.-%, preferably 83.85 to 93.73 wt.-% of one or more than one (meth)acrylic monomer(s) that individually yield(s) a homopolymer having a glass transition temperature ($T_g$) of -40 °C or less
(b) 5.00 to 14.00 wt.-%, preferably 6.00 to 12.00 wt.-% of one or more than one ethylenically unsaturated monomer(s) that individually yield(s) a homopolymer having a $T_g$ of 15 °C or higher
(c) 0.10 to 5.00 wt.-%, preferably 0.20 to 4.00 wt.-% of one or more than one ethylenically unsaturated monomer(s) having an acid and/or a hydroxyl functional group
(d) 0.01 to 0.25 wt.-%, preferably 0.07 to 0.15 wt.-% of a chain transfer agent

wherein monomers (a) to (d) are different from each other and the weight percentages is based on the total amount of monomers in the monomer mixture,
wherein the pressure sensitive adhesive dispersion polymer has a tanDelta maximum within a temperature range between -25 °C and -15 °C and
a tanDelta value at 130 °C between 0.38 and 0.55, wherein the tanDelta is determined by Dynamic Mechanical Analysis (DMA) at an angular frequency of 10 rad/s using a parallel plate tool.

The pressure sensitive adhesive in accordance with the invention comprises 0 to 10 parts by weight of tackifiers (relative to 100 parts by weight of the pressure sensitive adhesive dispersion polymer).

The one or more than one (meth)acrylic monomer(s) (a) may individually yield a homopolymer having a glass transition temperature ($T_g$) in the range of -65 °C to -40 °C.

The one or more than one (meth)acrylic monomer(s) (a) may be selected from 2 ethylhexyl acrylate, n-butyl acrylate, 3-methylbutyl acrylate, hexyl acrylate, heptyl acrylate, octyl acrylate, nonyl acrylate, propyl acrylate, propylheptyl acrylate, heptadecyl acrylate, decyl methacrylate, dodecyl methacrylate, isodecyl methacrylate, octyl methacrylate, lauryl methacrylate, 2-methoxyethyl acrylate, 3 methoxypropyl acrylate, 3-ethoxypropyl acrylate, 3-methoxybutyl acrylate, hydroxybutyl acrylate, hydroxyethylcaprolactone acrylate, and combinations thereof, preferably from 2-ethylhexyl acrylate, n-butyl acrylate, and combinations thereof, more preferably n-butyl acrylate.

The monomer mixture may comprise (a) 83.85 to 93.73 wt.-% the one or more than one (meth)acrylic monomer(s) that individually yield(s) a homopolymer having a glass transition temperature ($T_g$) of - 40 °C or less; wherein the weight percentage is based on the total amount of monomers in the monomer mixture.

In a preferred embodiment the (meth)acrylic monomer consists of n-butyl acrylate.

The one or more than one ethylenically unsaturated monomer(s) (b) may individually yield a homopolymer having a glass transition temperature ($T_g$) of 15 °C or higher, preferably in the range of 15 °C to 150 °C, more preferably in the range 18 °C to 120 °C.

The one or more than one ethylenically unsaturated monomer(s) (b) may be selected from acrylonitrile, 3,3,5-trimethylcyclohexyl acrylate, cyclohexyl acrylate, isobornyl acrylate, octadecyl acrylate, tert-butyl acrylate, 2-phenylethyl methacrylate, benzyl methacrylate, n-butyl methacrylate, cyclohexyl methacrylate, ethyl methacrylate, glycidyl methacrylate, hexadecyl methacrylate, isobornyl methacrylate, isobutyl methacrylate, isopropyl methacrylate, methyl methacrylate, neopentyl methacrylate, octadecyl methacrylate, propyl methacrylate, tert-butyl methacrylate, styrene, methoxy styrene, 2-methyl styrene, 3-methyl styrene, 4-ethyl styrene, 4-isopropyl styrene, 4-methoxy-2-methyl styrene, 4-methoxy styrene, 4-methyl styrene, 2-chloro styrene, 4-bromo styrene, 4-chloro styrene, 4-fluoro styrene, and combinations thereof, preferably from methyl methacrylate, n-butyl methacrylate, styrene and combinations thereof, more preferably methyl methacrylate.

The monomer mixture may comprise (b) 6.00 to 12.00 wt.-% of the one or more than one ethylenically unsaturated monomer(s) that individually yield(s) a homopolymer having a $T_g$ of 15 °C or higher; wherein the weight percentage is based on the total amount of monomers in the monomer mixture.

In a preferred embodiment the ethylenically unsaturated monomer consists of methyl methacrylate.

The one or more than one ethylenically unsaturated monomer(s) having an acid functional group (c) may be selected from ethylenically unsaturated carboxylic acid monomers, ethylenically unsaturated sulfonic acid monomers, ethylenically unsaturated phosphorous-containing acid monomers, preferably from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, vinyl sulfonic acid, phenyl vinyl sulfonate, sodium 4-vinylbenzene sulfonate, 2-methyl-2-propene-1-sulfonic acid, 4-styrenesulfonic acid, 2-acrylamido-2-methyl-1-propane sulfonic acid, vinyl phosphonic acid, dimethyl vinyl phosphonate, diethyl vinyl phosphonate, diethyl allyl phosphonate, allyl phosphonic acid, and combinations thereof, more preferably from (meth)acrylic acid.

Preferred is (meth)acrylic acid of the formula I,

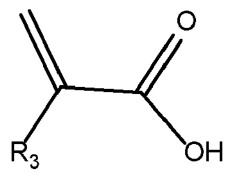

(I)

where $R^3$ = is H or $CH_3$; preference is given optionally to using the mixture of acrylic acid or methacrylic acid. Acrylic acid is particularly preferred.

The one or more than one ethylenically unsaturated monomer(s) having a hydroxyl functional group (c) may be selected from allyl alcohol, vinyl alcohol, N methylolacrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, preferably hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, more preferably hydroxyethyl (meth)acrylate, hydroxypropyl (meth)acrylate, hydroxybutyl (meth)acrylate, and combinations thereof.

The one or more than one ethylenically unsaturated monomer(s) having an acid and hydroxy functional group (c) may be selected from 3-allyloxy-2-hydroxy-1-propane sulfonic acid.

The monomer mixture may comprise (c) 0.20 to 4.00 wt.-%, preferably 0.50 to 3.00 wt.-% of the one or more than one ethylenically unsaturated monomer(s) having an acid and/or a hydroxyl functional group; wherein the weight percentage is based on the total amount of monomers in the monomer mixture.

In a preferred embodiment the ethylenically unsaturated monomers consist of acrylic acid and hydroxyethyl methacrylate.

The chain transfer agent (d) may be selected from n-dodecyl mercaptan, carbon tetrachloride, carbon tetrabromide, bromotrichloro methane, 4-methyl benzenethiol, isooctyl 3-mercaptopropionate, tert-nonyl mercaptan, 4,4'-thiobis benzenethiol, tert dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, preferably n-dodecyl mercaptan.

The monomer mixture may comprise (d) 0.10 to 0.20 wt.-% of the chain transfer agent; wherein the weight percentage is based on the total amount of monomers in the monomer mixture.

In a preferred embodiment the chain transfer agent consists of n-dodecyl mercaptan.

According to one particularly preferred variant, the composition of the polymer is as follows:

(a) 80.75 to 94.89 wt.-%, preferably 83.85 to 93.73 wt.-% of n-butyl acrylate
(b) 5.00 to 14.00 wt.-%, preferably 6.00 to 12.00 wt.-% of methyl methacrylate
(c) 0.10 to 5.00 wt.-%, preferably 0.20 to 4.00 wt.-% of acrylic acid and (hydroxyethyl)methacrylate
(d) 0.01 to 0.25 wt.-%, preferably 0.07 to 0.15 wt.-% of a chain transfer agent like n-dodecyl mercaptan

The pressure sensitive adhesive dispersion polymer of the present invention has a tanDelta maximum within a temperature range between -25 °C and -15 °C and a tanDelta value at 130 °C of 0.38 to 0.55. The tanDelta is determined by Dynamic Mechanical Analysis (DMA) at an angular frequency of 10 rad/s using a parallel plate tool as further described in the Examples.

As used herein, the term "tanDelta" also referred to as damping factor, dissipation factor or loss factor is defined as the ratio between the loss modulus (G") and the elastic modulus (G'). According to the present invention, the tanDelta value at 130 °C may be between 0.40 to 0.50, preferably between 0.40 to 0.45. A person skilled in the art will appreciate that any range between any of the explicitly disclosed lower and upper limit is herein disclosed.

The glass transition temperatures of the monomers specified above that individually yield a certain homopolymer glass transition temperature (Tg) refer to glass transition temperatures as determined by differential scanning calorimetry (DSC). The skilled person is aware in this context that DSC is only sufficiently conclusive if, after an initial heating cycle to a temperature that is at least 25 °C above the highest glass transition or melting temperature but at least 20 °C below the lowest decomposition temperature of a material, the material sample is kept at this temperature for at least 2 min. The sample is then cooled down to a temperature of at least 20 °C below the lowest glass transition or melting temperature to be determined, whereby the cooling rate should be a maximum of 20 °C/min, preferably a maximum of 10 °C/min. After a further waiting time of a few minutes, the actual measurement then takes place, during which the sample is heated to at least 20 °C above the highest melting or glass transition temperature at a heating rate of generally 10 °C/min or less. The respective highest and lowest limit temperatures can be roughly specified in simple preliminary measurements with a separate sample.

The pressure sensitive adhesive dispersion polymer according to the present invention can be made by any emulsion polymerization process known to a person skilled in the art, provided that the monomer mixture as herein defined is employed.

Descriptions of this process can be found for example in "Emulsion Polymerization and Emulsion Polymers" by Peter A. Lovell and Mohamed S. El-Aasser - Wiley-VCH 1997 - ISBN 0-471-96746-7 or in EP 1 378 527 B1.

During the polymerization it cannot be ruled out that not all the monomers undergo reaction to form polymers. It is obvious here that the residual monomer content is to be as small as possible. Preference is given to providing adhesives comprising the polymer dispersion with a residual monomer content of less than or equal to 1 wt.-%, more particularly less than or equal to 0.5 wt.-% (relative to 100 parts by weight of the pressure sensitive adhesive dispersion polymer).

In the emulsion polymerization for preparing the pressure sensitive adhesive dispersion polymer of the present invention, a seed dispersion may be employed. Any seed particles as known to the person skilled in the art can be used.

The seed particles are preferably present in an amount of 0.01 to 10 parts by weight, preferably 0.1 to 5 parts by weight, based on 100 parts by weight of total ethylenically unsaturated monomers employed in the polymer. A person skilled in the art will understand that any range formed by any of the explicitly disclosed lower limits and upper limits is explicitly encompassed in the present specification.

The process for the preparation of the above-described pressure sensitive adhesive dispersion polymer can be performed at temperatures of from 0 to 130 °C, preferably of from 0 to 100 °C, particularly preferably of from 20 to 95 °C, very particularly preferably of from 40 to 90 °C, in the presence of no or one or more emulsifiers, no or one or more protective colloids and one or more initiators.

Initiators which can be used when carrying out the present invention may include water-soluble and/or oil-soluble initiators which are effective for the purposes of the polymerization. Representative initiators are well known in the technical area and include, for example: azo compounds (such as, for example, AIBN, AMBN and cyanovaleric acid) and inorganic peroxy compounds, such as hydrogen peroxide, sodium, potassium and ammonium peroxydisulfate, peroxycarbonates and peroxyborates, as well as organic peroxy compounds, such as alkyl hydroperoxides, dialkyl peroxides, acyl hydroperoxides, and diacyl peroxides, as well as esters, such as tert-butyl perbenzoate and combinations of inorganic and organic initiators. Suitable initiators may be selected from 2,3-dimethyl-2,3-diphenylbutane, tert-butyl hydroperoxide, tert-amyl hydroperoxide, cumyl hydroperoxide, 1,1,3,3-tetramethylbutyl hydroperoxide, isopropylcumyl hydroperoxide, p-menthane hydroperoxide, 2,5-di(tert-butylperoxy)-2,5-dimethyl-3-hexyne, 3,6,9-triethyl-3,6,9-trimethyl-1,4,7-triperoxonane, di(tert-butyl)peroxide, 2,5-dimethyl-2,5-di(tert-butylperoxy)hexane, di(tert-butylperoxy-isopropyl)benzene, tert-butyl cumyl peroxide, di-(tert-amyl)-peroxide, dicumyl peroxide, butyl 4,4-di(tert-butylperoxy)valerate, tert-butylperoxybenzoate, 2,2-di(tert-butylperoxy)butane, tert-amyl peroxy-benzoate, tert-butylperoxy-acetate, tert-butylperoxy-(2-ethylhexyl)carbonate, tert-butylperoxy isopropyl carbonate, tert-butyl peroxy-3,5,5-trimethyl-hexanoate, 1,1-di(tert-butylperoxy)cyclohexane, tert-amyl peroxyacetate, tert-amylperoxy-(2-ethylhexyl)carbonate, 1,1-di(tert-butylperoxy)-3,5,5-trimethylcyclohexane, 1,1-di(tert-amylperoxy)cyclohexane, tert-butyl-monoperoxy-maleate, 1,1'-azodi(hexahydrobenzonitrile), tert-butyl peroxy-isobutyrate, tert-butyl peroxydiethylacetate, tert-butyl peroxy-2-ethylhexanoate, dibenzoyl peroxide, tert-amyl peroxy-2-ethylhexanoate, di(4-methylbenzoyl)peroxide, 1,1,3,3-tetramethylbutyl peroxy-2-ethylhexanoate, ammonium peroxodisulfate, 2,5-dimethyl-2,5-di(2-ethylhexanoylperoxy)hexane, 2,2'-azodi(2-methylbutyronitrile), 2,2'-azodi(isobutyronitrile), didecanoyl peroxide, potassium persulfate, dilauroyl peroxide, di(3,5,5-trimethylhexanoyl) peroxide, tert-amyl peroxypivalate, tert-butyl peroxyneoheptanoate, 1,1,3,3- tetramethylbutyl peroxypivalate, tert-butyl peroxypivalate, dicetyl peroxydicarbonate, dimyristyl peroxydicarbonate, di(2-ethylhexyl) peroxydicarbonate, di(4-tert-butylcyclohexyl) peroxydicarbonate, diisopropyl peroxydicarbonate, tert-butyl peroxyneodecanoate, di-sec-butyl peroxydicarbonate, tert-amyl peroxyneodecanoate, cumyl peroxyneoheptanoate, di(3-methoxybutyl) peroxydicarbonate, 1,1,3,3- tetramethylbutyl peroxyneodecanoate, cumyl peroxyneodecanoate, diisobutyryl peroxide, and mixtures thereof.

The initiator may be used in a sufficient amount to initiate the polymerization reaction at a desired rate. In general, an amount of initiator of from 0.01 to 5 wt.-%, preferably of from 0.1 to 4 wt.-%, based on the total weight of

monomers in the monomer mixture, is sufficient. The amount of initiator is most preferably of from 0.01 to 2 wt.-%, based on the total weight of monomers in the monomer mixture.

The above-mentioned inorganic and organic peroxy compounds may also be used alone or in combination with one or more suitable reducing agents, as is well known in the art. Examples of such reducing agents may include sulfur dioxide, alkali metal disulfites, alkali metal and ammonium hydrogen sulfites, thiosulfates, dithionites and formaldehyde sulfoxylates, as well as hydroxylamine hydrochloride, hydrazine sulfate, iron (II) sulfate, cuprous naphthanate, glucose, sulfonic acid compounds such as sodium methane sulfonate, amine compounds such as dimethylaniline and ascorbic acid. The quantity of the reducing agent is preferably 0.03 to 10 parts by weight per part by weight of the polymerization initiator.

Surfactants or emulsifiers which are suitable for stabilizing the dispersion polymer may include those conventional surface-active agents for polymerization processes. The surfactant or surfactants can be added to the aqueous phase and/or the monomer phase. An effective amount of surfactant in a seed process is the amount which was chosen for supporting the stabilization of the particle as a colloid, the minimization of contact between the particles and the prevention of coagulation. In a non-seeded process, an effective amount of surfactant is the amount which was chosen for determining the particle size.

Representative surfactants include saturated and ethylenically unsaturated sulfonic acids or salts thereof, including, for example, unsaturated hydrocarbonsulfonic acid, such as vinylsulfonic acid, allylsulfonic acid and methallylsulfonic acid, and salts thereof; aromatic hydrocarbon acids, such as, for example, p-styrenesulfonic acid, isopropenylbenzenesulfonic acid and vinyloxybenzenesulfonic acid and salts thereof; sulfoalkyl esters of acrylic acid and methacrylic acid, such as, for example, sulfoethyl methacrylate and sulfopropyl methacrylate and salts thereof, and 2-acrylamido-2-methylpropanesulfonic acid and salts thereof; alkylated diphenyl oxide disulfonates, sodium dodecylbenzenesulfonates and dihexyl or dioctyl esters of sodium sulfosuccinate, sodium alkyl esters of sulfonic acid, ethoxylated alkylphenols and ethoxylated alcohols; fatty alcohol sulfates and fatty alcohol (poly)ether sulfates.

The type and the amount of the surfactant is governed typically by the number of particles, their size and their composition. Typically, the surfactant is used in amounts of from 0 to 20 wt.-%, preferably from 0 to 10 wt.-%, more preferably from 0 to 5 wt.-%, based on the total weight of the monomers in the monomer mixture. The amount of surfactant includes all values and sub-values therebetween, based on the total weight of the monomer in the monomer composition. The polymerization may be conducted without using surfactants.

Alternatively, protective colloids can also be used instead of or in addition to the surfactants described above. As used herein, the term "protective colloids" refers generally to water-soluble polymer compounds to which are employed for stabilizing finely dispersed polymer particles. The protective colloids can surround the particles with a film, and due to its, e.g., spatial expansion, prevents the particles from approaching each other and thus from flocculating or coagulating. Suitable colloids include polyhydroxy compounds, such as polyvinyl alcohol, partially acetylated polyvinyl alcohol, casein, hydroxyethyl starch, carboxymethyl cellulose, hydroxyethyl cellulose, hydroxypropyl cellulose, polysaccharides, and degraded polysaccharides, polyethylene glycol, polyvinyl pyrrolidone, ethylene glycol-propylene glycol block copolymers and gum arabic. The preferred protective colloids are carboxymethyl cellulose, hydroxyethyl cellulose and hydroxypropyl cellulose. In general, these protective colloids are used in contents of from 0 to 10, preferably from 0 to 5, more preferably from 0 to 3 parts by weight, based on the total weight of the monomers. The amount of protective colloids includes all values and sub-values therebetween, based on the total weight of the monomers.

The adhesive is a pressure sensitive adhesive (PSA), in other words an adhesive which even under relatively weak applied pressure allows durable bonding to virtually all substrates and which after use can be detached from the substrate again substantially without residue. A PSA has a permanently pressure-sensitive adhesive effect at room temperature, in other words possessing sufficiently low viscosity and a high tack, and so the surface of the bonding substrate in question is wetted even with low applied pressure. The bondability of the adhesive derives from its adhesive properties, and the redetachability from its cohesive properties.

In order to acquire pressure-sensitive adhesive properties, the adhesive must be above its glass transition temperature at the processing temperature, in order to have viscoelastic properties. Because cable harness wrapping takes place at normal ambient temperature (approximately between 15 °C to 25 °C), the glass transition temperature of the PSA formulation is preferably below +15 °C (determined by DSC (Differential Scanning Calorimetry) in accordance with DIN 53765 at a heating rate of 10 K/min).

The glass transition temperature of the acrylate copolymers can be estimated, in accordance with the equation of Fox, from the glass transition temperatures of the homopolymers and from their relative proportions.

In order to obtain polymers, as for example pressure sensitive adhesives or heat-sealing compounds, having desired glass transition temperatures, the quantitative composition of the monomer mixture is advantageously selected such that an equation (E1) in analogy to the ***Fox*** equation (cf. T.G. Fox, Bull. Am. Phys. Soc. 1956, 1, 123) produces the desired $T_g$ for the polymer.

$$\frac{1}{T_g} = \sum_n \frac{w_n}{T_{g,n}} \qquad (E1)$$

The possible addition of tackifiers automatically raises the glass transition temperature, by around 5 to 40 K depending on amount added, compatibility and softening temperature.

Acrylate copolymers having a glass transition temperature of at most 0 °C are therefore preferred.

The adhesive of the invention has a peel adhesion on steel of at least 2.0 N/cm according to ASTM D3330 (for an adhesive coat weight of 30 $g/m^2$ on a 23 μm polyester film carrier).

According to the present invention, the pressure sensitive adhesive composition may comprise a tackifier resin in addition to the pressure sensitive adhesive dispersion polymer of the present invention.

A "tackifier resin" is understood, in accordance with the general understanding of the skilled person, to refer to an oligomeric or polymeric resin which raises the autoadhesion (the tack, the inherent adhesiveness) of the PSA by comparison with the PSA containing no tackifier resin but is otherwise identical.

The use of tackifiers for boosting the peel adhesion values of PSAs is known in principle. This effect also comes about if the adhesive is admixed with 0.00 to 10.00 parts by weight (relative to 100 parts by weight of the pressure sensitive adhesive dispersion polymer) of tackifier, preferably 2.00 to 7.50 parts by weight.

As the tackifier resin, one, two or more species can be used, selected from various known tackifier resins. Suitability as tackifiers, also referred to as tackifier resins, is possessed in principle by all known classes of compound. Tackifiers are, for example, hydrocarbon resins (for example, polymers based on unsaturated $C_5$ or $C_9$ monomers), terpene phenolic resins, polyterpene resins based on raw materials such as, for example, α- or β-pinene, aromatic resins such as coumarone-indene resins or resins based on styrene or α--methylstyrene such as rosin and its derivatives, for example disproportionated, dimerized or esterified rosin, for example reaction products with glycol, glycerol or pentaerythritol, to name but a few.

Preferred resins are those based on terpene phenols and rosin esters.

The term "rosin-based resin" refers to both a rosin and a rosin-derived resin. Examples of a rosin may include unmodified rosins (raw rosins) such as gum rosin, wood rosin or tall-oil rosin, and modified rosins obtainable from the unmodified rosins via modifications such as hydrogenation, disproportionation or polymerization. Suitable examples of a rosin-derived resin include rosin esters such as an unmodified rosin ester which is an ester of an unmodified rosin and an alcohol, and a modified rosin ester which is an ester of a modified rosin and an alcohol; an unsaturated fatty acid-modified rosin obtainable by modifying a rosin with an unsaturated fatty acid; an unsaturated fatty acid-modified rosin ester obtainable by modifying a rosin ester with an unsaturated fatty acid; rosin alcohols obtainable by reduction of carboxyl groups in rosins or aforementioned various rosin derivatives (including rosin esters, unsaturated fatty acid-modified rosin, and an unsaturated fatty acid-modified rosin ester); metal salts of rosins or aforementioned various rosin derivatives. Suitable examples of a terpene resin include terpenes (typically monoterpenes) such as α pinene, ß-pinene, d-limonene, l-limonene and dipentene. Suitable examples of a modified terpene resin include resins obtainable by modifying the terpene resins, such as styrene-modified terpene resins or hydrogenated terpene resins. Suitable examples of a phenolic resin include a terpene-phenol resin, a hydrogenated terpene-phenol resin, an alkylphenol resin and a rosin-phenol resin.

Preferred tackifier resins are those having an ASTM E28-99 (2009) softening point of more than 90 °C according to ASTM E29-99 (2009), more preferably of more than 100 °C.

Particularly preferred are resins based on terpene phenols and rosin esters having a softening point of more than 100 °C according to ASTM E28-99 (2009). The resins are usefully employed in dispersion form. In that way they can easily be mixed in finely divided form with the polymer dispersion.

Preferably, the pressure sensitive adhesive composition of the present invention may be free of any tackifier resins. The pressure sensitive adhesive composition of the present invention may be substantially free of any tackifier resins. As used herein, the term "substantially free" means that a tackifier resin is present, if at all, as an incidental impurity, such as in an amount of less than 0.04 wt.-%, based on the total weight of the pressure sensitive adhesive composition. According to the present invention, the pressure sensitive adhesive composition of the present invention may be completely free of any tackifier resins. As used herein, the term "completely free" means that a tackifier resin is not present in the pressure sensitive adhesive composition at all.

For further improvement in the cable compatibility, the adhesive formulation may optionally have been blended with light stabilizers or with primary and/or secondary ageing inhibitors.

Ageing inhibitors used may be products based on sterically hindered phenols, phosphites, thiosynergists, sterically hindered amines or UV absorbers.

Preference is given to using primary antioxidants such as, for example, Irganox 1010 or Irganox 254, alone or in combination with secondary antioxidants such as, for example, Irgafos TNPP or Irgafos 168.

The ageing inhibitors here may be used in any desired combination with one another, with particularly good

ageing inhibition being displayed by mixtures of primary and secondary antioxidants in combination with light stabilizers such as Tinuvin 213, for example.

Ageing inhibitors in which a primary antioxidant is united with a secondary antioxidant in one molecule have proved to be especially advantageous. These ageing inhibitors comprise cresol derivatives whose aromatic ring is substituted by thioalkyl chains at two arbitrary, different locations, preferably in ortho- and meta-position relative to the OH group, it also being possible for the sulfur atom to be joined to the aromatic ring of the cresol building block via one or more alkyl chains. The number of carbon atoms between the aromatic moiety and the sulfur atom may be between 1 and 10, preferably between 1 and 4. The number of carbon atoms in the alkyl side chain may be between 1 and 25, preferably between 6 and 16. Particularly preferred in this context are compounds of the 4,6-bis(dodecylthiomethyl)-o-cresol, 4,6-bis(undecylthiomethyl)-o-cresol, 4,6-bis(decylthiomethyl)-o-cresol 4,6-bis(nonylthiomethyl)-o-cresol or 4,6-bis(octylthiomethyl)-o-cresol type. Ageing inhibitors of these kinds are available for example from the company Ciba Geigy under the name Irganox 1726 or Irganox 1520.

The amount of the ageing inhibitor or ageing inhibitor package added ought to be situated within a range between 0.10 and 10.00 wt.-%, preferably in a range between 0.20 and 5.00wt.-%, very preferably in a range between 0.50 and 3.00 wt.-%, based on the total solids content of the pressure sensitive adhesive composition.

The pressure sensitive adhesive composition may further comprise rheological additives (thickeners), defoamers, deaerating agents, wetting agents, flow control agents, and combinations thereof. The pressure sensitive adhesive composition of the present invention may comprise rheological additives (thickeners), defoamers, deaerating agents, wetting agents, flow control agents, and combinations thereof, in amounts in a range of from 0.1 to 5 wt.-%, based on the total solids content of the pressure sensitive adhesive composition.

A fundamental distinction is made here between organic and inorganic rheological additives.

The organic thickeners divide in turn into two essential modes of action: (i) the thickening of the aqueous phase, i.e. non-associating, and (ii) association between thickener molecule and particles, in part with incorporation of the stabilizers (emulsifiers). Representatives of the first (i) compound group are water-soluble polyacrylic acids and polycoacrylic acids, which in the basic medium form polyelectrolytes of high hydrodynamic volume. The skilled person also refers to these for short as ASE (alkali swellable emulsion). They are distinguished by high resting shear viscosities and strong shear thinning. Another class of compound are the modified polysaccharides, especially cellulose ethers such as carboxymethylcellulose, 2-hydroxyethylcellulose, carboxymethyl-2-hydroxyethylcellulose, methylcellulose, 2-hydroxyethylmethylcellulose, 2-hydroxyethylethylcellulose, 2-hydroxypropylcellulose, 2-hydroxypropylmethylcellulose, 2-hydroxybutylmethylcellulose. Additionally, included in this class of compound are less widely used polysaccharides such as starch derivatives and specific polyethers.

The action group of the (ii) associative thickeners are, in principle, block copolymers having a water-soluble middle block and hydrophobic end blocks, the end blocks interacting with the particles or with themselves and so forming a three-dimensional network with incorporation of the particles. Typical representatives are familiar to the skilled person as HASE (hydrophobically modified alkali swellable emulsion), HEUR (hydrophobically modified ethylene oxide urethane) or HMHEC (hydrophobically modified hydroxyethyl cellulose). In the case of the HASE thickeners, the middle block is an ASE, and the end blocks are usually long, hydrophobic alkyl chains coupled on via polyethylene oxide bridges. In the case of the HEUR, the water-soluble middle block is a polyurethane, and in the HMHEC it is a 2-hydroxyethylcellulose. The non-ionic HEUR and HMHEC, in particular, are largely insensitive to pH.

Depending on their molecular structure, the associative thickeners result in more or less Newtonian (shear rate-independent) or pseudoplastic (shear-liquefying) flow behaviour. Occasionally they also exhibit a thixotropic character, meaning that the viscosity is subject not only to dependency on shearing force but also to dependency on time.

The inorganic thickeners are usually layered silicates of natural or synthetic origin, examples being hectorites and smectites. In contact with water, the individual layers part from one another. At rest, as a result of different charges on surfaces and edges of the platelets, they form a space-filling house-of-cards structure, resulting in high resting shear viscosities through to yield points. On shearing, the house-of-cards structure collapses and a marked drop in the shear viscosity is observed. Depending on charge, concentration and geometrical dimensions of the platelets, the development of structure may take some time, and so with inorganic thickeners of this kind it is also possible to obtain thixotropy.

The thickeners can in some cases be stirred directly into the adhesive dispersion, or in some cases are predispersed or prediluted advantageously in water beforehand.

Suppliers of thickeners are, for example, OMG Borchers, Omya, Byk Chemie, Dow Chemical Company, Evonik or Münzing Chemie.

The pressure sensitive adhesive composition may also comprise fillers such as silicon dioxides, glass in the form of solid or hollow beads, microballoons, calcium carbonates, zinc oxides, titanium dioxides, aluminum oxides, aluminum oxide hydroxides, and combinations thereof. According to the present invention, the pressure sensitive adhesive composition of the present invention may comprise fillers in amounts in a range of from 0.1 to 20 wt.-%, based on the total solids content of the pressure sensitive adhesive composition.

Suitable carriers include in principle all carrier materials, preferably textile carriers and more preferably woven

fabrics, more particularly woven polyester fabrics.

As carrier material for the adhesive tape it is possible to use all known textile carriers such as knitted fabrics, scrims, tapes, braids, tufted textiles, felts, woven fabrics (encompassing plain weave, twill and satin weave), knitted fabrics (encompassing warp knits and other knits) or nonwoven webs, the term "nonwoven web" comprehending at least sheetlike textile structures in accordance with EN 29092 (1988) and also stitchbonded webs and similar systems.

Particularly advantageous is an adhesive tape wherein a woven, nonwoven or knitted fabric is used as carrier. Carriers of these kinds are described for example in WO 2015/004190 A1.

It is likewise possible to use woven and knitted spacer fabrics with lamination.

Spacer fabrics of these kinds are disclosed in EP 0 071 212 B1. Spacer fabrics are mat-like layer structures comprising a cover layer of a fibre or filament web, an underlayer and individual retaining fibres or bundles of such fibres between these layers, these fibres being distributed over the area of the layer structure, being needled through the particle layer and joining the cover layer and the underlayer to one another. As an additional although not mandatory feature, the retaining fibres in accordance with EP 0 071 212 B1 contain particles of inert minerals, such as sand, gravel or the like, for example.

The retaining fibres needled through the particle layer hold the cover layer and the underlayer at a distance from one another and are joined to the cover layer and the underlayer.

Nonwovens contemplated include, in particular, consolidated staple fibre webs, but also filament webs, meltblown webs and spunbonded webs, which generally require additional consolidation. Possible consolidation methods known for webs include mechanical, thermal and chemical consolidation. If with mechanical consolidations the fibres are held together purely mechanically usually by entanglement of the individual fibres, by the interlooping of fibre bundles or by the stitching-in of additional threads, it is possible by thermal and by chemical techniques to obtain adhesive (with binder) or cohesive (binderless) fibre-fibre bonds. Given appropriate formulation and an appropriate process regime, these bonds can be restricted exclusively, or at least predominantly, to fibre nodal points, so that a stable, three-dimensional network is formed while nevertheless retaining the relatively loose, open structure in the web.

Webs which have proved to be particularly advantageous are those consolidated in particular by overstitching with separate threads or by interlooping.

Consolidated webs of this kind are produced for example on stitch bonding machines of the "Malimo" type from the company Karl Mayer, formerly Malimo, and can be obtained from companies including Techtex GmbH. A stitchbonded nonwoven is formed from a nonwoven material with a multiplicity of stitches running parallel to one another. These stitches are formed by the stitching-in or stitch-knitting of continuous textile threads. For this type of nonwoven (also known as a Maliwatt). Malifleece is characterized in that a cross-laid web is consolidated by the formation of loops from fibres of the web.

The carrier used may also be a web of the Kunit or Multiknit type. A Kunit web is characterized in that it originates from the processing of a longitudinally oriented fibre web to form a sheetlike structure which has loops on one side and has loop feet or pile fibre folds on the other side, but possesses neither threads nor prefabricated sheetlike structures. A web of this kind as well has been produced for a relatively long time, for example on stitchbonding machines of the "Malimo" type from the company Karl Mayer. A further characterizing feature of this web is that, as a longitudinal-fibre web, it is able to absorb high tensile forces in the longitudinal direction. The characteristic feature of a Multiknit web relative to the Kunit web is that the web is consolidated on both the top and bottom sides by virtue of the double-sided needle punching. The starting product used for a Multiknit is generally one or two single-sidedly interlooped pile fibre nonwovens produced by the Kunit process. In the end product, both top sides of the nonwovens are shaped by means of interlooped fibres to form a closed surface and are joined to one another by fibres which stand almost perpendicularly. An additional possibility is to introduce further needlable sheetlike structures and/or scatterable media.

Finally, stitchbonded webs as an intermediate are also suitable for forming a covering of the invention and an adhesive tape of the invention. A stitchbonded web is formed from a nonwoven material having a large number of stitches extending parallel to one another. These stitches are brought about by the stitching-in or stitchbonding of continuous textile threads. For this type of web, stitchbonding machines of the "Malimo" type from the company Karl Mayer are known.

Also particularly suitable are needlefelt webs. In a needlefelt web, a tuft of fibres is made into a sheetlike structure by means of needles provided with barbs. By alternate introduction and withdrawal of the needles, the material is consolidated on a needle bar, with the individual fibres interlooping to form a firm sheetlike structure. The number and configuration of the needling points (needle shape, penetration depth, double-sided needling) determine the thickness and strength of the fibre structures, which are in general lightweight, air-permeable and elastic.

Also particularly advantageous is a staple fibre web which is mechanically preconsolidated in the first step or is a wet-laid web laid hydrodynamically, in which between 2 wt.-% and 50 wt.-% by weight of the web fibres are fusible fibres, more particularly between 5 wt.-% and 40 wt.-% by weight of the web fibres.

A web of this kind is characterized in that the fibres are laid wet or, for example, a staple fibre web is preconsolidated by the formation of loops from fibres of the web by needling, stitching or air-jet and/or water-jet treatment.

In a second step, thermofixing takes place, with the strength of the web being increased again by the melting,

or partial melting, of the fusible fibres.

For the utilization of nonwovens in accordance with the invention, the adhesive consolidation of mechanically preconsolidated or wet-laid webs is of particular interest, it being possible for said consolidation to take place by way of the addition of binder in solid, liquid, foamed or paste-like form. A great diversity of theoretical presentation forms is possible: for example, solid binders as powders for trickling in; as a sheet or as a mesh; or in the form of binding fibres. Liquid binders can be applied as solutions in water or organic solvents, or as a dispersion. For adhesive consolidation, binding dispersions are predominantly selected: thermosets in the form of phenolic or melamine resin dispersions, elastomers as dispersions of natural or synthetic rubbers or, usually, dispersions of thermoplastics such as acrylates, vinyl acetates, polyurethanes, styrene-butadiene systems, PVC, and the like, and also copolymers thereof. Normally the dispersions are anionically or nonionically stabilized, although in certain cases cationic dispersions may also be of advantage.

The binder may be applied in a manner which is in accordance with the prior art and for which it is possible to consult, for example, standard works of coating or of nonwoven technology such as "Vliesstoffe" (Georg Thieme Verlag, Stuttgart, 1982) or "Textiltechnik-Vliesstofferzeugung" (Arbeitgeberkreis Gesamttextil, Eschborn, 1996).

For mechanically preconsolidated webs which already possess sufficient composite strength, the single-sided spray application of a binder is appropriate for producing specific changes in the surface properties.

Such a procedure not only is sparing in its use of binder but also greatly reduces the energy requirement for drying. Since no squeeze rolls are required and the dispersions remain predominantly in the upper region of the nonwoven, unwanted hardening and stiffening of the web can be largely prevented.

For sufficient adhesive consolidation of the web carrier, the addition of binder in the order of magnitude of 1 wt.-% to 50 wt.-%, more particularly 3 wt.-% to 20 wt.-%, based on the weight of the fibre web, is generally required.

The binder may be added as early as during the manufacture of the web, in the course of mechanical preconsolidation, or else in a separate process step, which may be carried out in-line or off-line. Following the addition of binder, it is necessary temporarily to generate a condition for the binder in which the binder becomes adhesive and adhesively connects the fibres - this may be achieved during the drying, for example, of dispersions, or else by means of heating, with further possibilities for variation existing by way of areal or partial application of pressure. The binder may be activated in known drying tunnels, given an appropriate selection of binder, or else by means of infrared radiation, UV radiation, ultra-sound, high-frequency radiation or the like. For the subsequent end use it is sensible, though not absolutely necessary, for the binder to have lost its tack following the end of the web production process. It is advantageous that, as a result of thermal treatment, volatile components such as fibre assistants are removed, giving a web having favourable fogging values, so that when a low-fogging adhesive is used, it is possible to produce an adhesive tape having particularly favourable fogging values; accordingly, the covering as well has a very low fogging value.

By fogging (see DIN 75201 A) is meant the effect where, under unfavourable conditions, compounds of low molecular mass may outgas from the adhesive tapes and condense on cold parts. As a result of this it is possible, for example, for the view through the windscreen to be adversely affected.

A further special form of adhesive consolidation involves activating the binder by partial dissolution or partial swelling. In this case it is also possible in principle for the fibres themselves, or admixed speciality fibres, to take over the function of the binder. Since, however, such solvents are objectionable on environmental grounds, and/or are problematic in their handling, for the majority of polymeric fibres, this process is not often employed.

Advantageously and at least in regions, the carrier may have a single-sidedly or double-sidedly polished surface, preferably in each case a surface polished over the whole area. The polished surface may be chintzed, as elucidated in detail in EP 1 448 744 A1, for example.

Furthermore, the carrier may be compacted by calendering on a roll mill. The two rolls preferably run in opposite directions and at the same peripheral speed, causing the carrier to be pressed and compacted.

If there is a difference in the peripheral speed of the rolls, then the carrier is additionally polished.

The carrier is preferably a woven fabric, more preferably a woven polyester fabric. Particular preference is given to fabrics having the following construction:

- the thread count in the warp is 10 to 60/cm
- the thread count in the weft is 10 to 40/cm
- the warp threads possess a yarn weight of between 40 and 400 dtex, more particularly between 44 and 330 dtex, very preferably of 167 dtex
- the weft threads possess a yarn weight of between 40 and 660 dtex, more preferably between 44 and 400 dtex, very preferably of 167 dtex.

According to a further advantageous embodiment of the invention, the thread count in the warp is 40 to 50/cm, preferably 44/cm.

According to a further advantageous embodiment of the invention, the thread count in the weft is 18 to 22/cm,

preferably 20/cm.

According to a further advantageous embodiment of the invention, the woven fabric is a woven polyester fabric. Further possibilities are woven polyamide fabrics, woven viscose fabric and/or a woven blend fabric comprising the stated materials.

With further preference the thickness of the woven fabric is at most 300 μm, more preferably 170 to 230 μm, very preferably 190 to 210 μm. According to another advantageous embodiment of the invention, the carrier has a basis weight of up to 200 g/m$^2$, preferably 100 to 150 g/m$^2$.

Starting materials for the carrier material for the adhesive tape are more particularly (manmade) fibres (staple fibre or continuous filament) made from synthetic polymers, also called synthetic fibres, made from polyester, polyamide, polyimide, aramid, polyolefin, polyacrylonitrile or glass, (manmade) fibres made from natural polymers such as cellulosic fibres (viscose, Modal, Lyocell, Cupro, acetate, triacetate, Cellulon), such as rubber fibres, such as plant protein fibres and/or such as animal protein fibres and/or natural fibres made of cotton, sisal, flax, silk, hemp, linen, coconut or wool. The present invention, however, is not confined to the materials stated; it is instead possible, as evident to the skilled person without having to take an inventive step, to use a multiplicity of further fibres in order to produce the carrier. Likewise suitable, furthermore, are yarns fabricated from the fibres specified.

In the case of woven fabrics or scrims, individual threads may be produced from a blend yarn, and thus may have synthetic and natural constituents. Generally speaking, however, the warp threads and the weft threads are each formed of a single kind. The warp threads and/or the weft threads here may in each case be composed only of synthetic threads or only of threads made from natural raw materials - in other words, of a single kind.

The yarns or threads of the woven fabrics may be in the form of filaments. For the purposes of this invention, a filament refers to a bundle of parallel individual linear fibres/filaments, often also referred to in the literature as a multifilament. This fibre bundle may optionally be given inherent strengthening by torsion, and is then referred to as spun or folded filaments. Alternatively, the fibre bundle can be given inherent strengthening by entangling using compressed air or waterjets. In the text below, for all of these embodiments, only the term "filament" will be used, in a generalizing way. The filament may be textured or smooth and may have point strengthening or no strengthening.

A preferred material used for the textile carrier is polyester, owing to the outstanding ageing resistance and the outstanding media resistance with respect to chemicals and service fluids such as oil, petrol, antifreeze and the like. Polyester, moreover, has the advantage of leading to a highly abrasion-resistant and temperature-stable carrier, this being particularly important for the specific end use for the bundling of cables in motor vehicles and, for example, in the engine compartment. According to one embodiment of the invention, the carrier used is a PET nonwoven or a woven PET fabric.

The basis weight of the textile carrier is advantageously between 30 g/m$^2$ and 300 g/m$^2$ more advantageously between 50 g/m$^2$ and 200 g/m$^2$, very advantageously between 50 g/m$^2$ and 150 g/m$^2$, especially advantageously between 70 g/m$^2$ and 130 g/m$^2$.

According to one preferred embodiment of the invention, the adhesive, following application to the carrier, has been absorbed to an extent of more than 10 %, preferably more than 25 %, more preferably more than 50 % into the carrier. A numerical value of 25 % here, for example, means that the adhesive has penetrated the thickness of the textile carrier over a layer thickness of 25 %, that is, in the case of a carrier having a thickness of 100 μm, has penetrated over a layer thickness of 25 μm within the carrier - beginning from the surface of the carrier on which the adhesive has been coated, and in a direction perpendicular to the plane generated by the longitudinal and transverse directions, respectively.

Also suitable for the adhesive tape is a carrier material which consists of paper, of a laminate, of a film (for example PP, PE, PET, PA, PU), of foam or of a foamed film.

These non-textile sheetlike materials are especially appropriate when specific requirements necessitate such a modification of the invention. Films are generally thinner in comparison to textiles, for example, and, as a result of the imperforate layer, offer additional protection against penetration by chemicals and service fluids such as oil, petrol, antifreeze and the like into the actual cable area, and can be substantially adapted to requirements by an appropriate selection of the material from which they are constructed: with polyurethanes or polyolefin copolymers, for example, flexible and elastic jackets can be produced; with polyester and polyamides, good abrasion resistance and temperature stability are achieved.

Foams or foamed films, on the other hand, possess the qualities of more substantial space filling and of good soundproofing - where a length of cable is laid, for example, in a duct-like or tunnel-like area in the vehicle, a jacketing tape of appropriate thickness and soundproofing can prevent disruptive flapping and vibration from the outset.

Preference is given to a laminate of the textile carrier and of polymeric layer or film applied at least to one side of the textile carrier. It is additionally possible for films and/or polymeric layers to be applied on the topside and the bottom side of the textile carrier. Application may take place by lamination or by extrusion.

In a preferred variant, the textile carrier is provided on its bottom side with a film, which on the other side is furnished with a pressure sensitive adhesive.

Suitable material for films or polymeric material comprises films such as, for example, PP, PE, polyester, PA,

PU or PVC. The films themselves may consist in turn of a plurality of individual plies, as for example of plies which are coextruded to form film.

Preference is given to polyolefins, but copolymers of ethylene and polar monomers such as styrene, vinyl acetate, methyl methacrylate, butyl acrylate or acrylic acid are also included. It may be a homopolymer such as HDPE, LDPE, MDPE or a copolymer of ethylene with a further olefin such as propene, butene, hexene or octene (for example LLDPE, VLDPE). Also suitable are polypropylenes (for example polypropylene homopolymers, random polypropylene copolymers or polypropylene block copolymers).

The film preferably has a thickness of 12 μm to 100 μm, more preferably 28 to 50 μm, more particularly 35 μm. The film may be coloured and/or transparent.

The adhesive tape may ultimately have a liner material, with which the one or two layers of adhesive are lined before use. Suitable liner materials also include all of the materials set out comprehensively above.

It is preferred to use a non-linting material such as a polymeric film or a well-sized, long-fibre paper.

If the adhesive tape described is to be of low flammability, this quality can be achieved by adding flame retardants to the carrier and/or to the adhesive. These retardants may be organobromine compounds, if required with synergists such as antimony trioxide, although, with regard to the absence of halogen from the adhesive tape, preference will be given to using red phosphorus, organophosphorus compounds, mineral compounds or intumescent compounds such as ammonium polyphosphate, alone or in conjunction with synergists.

The adhesive coat weight, based on the adhesive tape area, is preferably between 40 and 160 g/m$^2$, more preferably between 60 and 130 g/m$^2$, with further preference between 80 and 100 g/m$^2$.

The general expression "adhesive tape" in the context of this invention encompasses all sheetlike structures such as two-dimensionally extended sheets or sheet sections, tapes with extended length and limited width, tape sections and the like, and also, lastly, diecuts or labels.

The adhesive tape therefore has a longitudinal extent and a latitudinal extent. The adhesive tape also has a thickness, extending perpendicularly to both extents, with the latitudinal extent and longitudinal extent being several times greater than the thickness. The thickness is very largely the same, preferably exactly the same, over the entire superficial extent of the adhesive tape defined by length and width.

The adhesive tape is present in particular in the form of a sheet web. A sheet web is an object whose length is several times greater than the width, with the width being approximately and preferably exactly the same along the entire length. The adhesive tape may be produced in the form of a roll, in other words rolled up onto itself in the form of an Archimedean spiral.

Applied to the reverse of the adhesive tape may be a reverse-face varnish, in order to exert a favourable influence on the unwind properties of the adhesive tape wound into the Archimedean spiral. This reverse-face varnish may for this purpose be furnished with silicone compounds or fluorosilicone compounds and also with polyvinylstearylcarbamate, polyethyleneiminestearylcarbamide or organofluorine compounds as abhesive substances.

The adhesive may be applied in the longitudinal direction of the adhesive tape, in the form of a stripe, the width of the stripe being lower than that of the carrier of the adhesive tape.

Depending on the particular utility, there may also be a plurality of parallel stripes of the adhesive coated on the carrier material.

The position of the stripe on the carrier is freely selectable, with preference being given to an arrangement directly at one of the edges of the carrier.

The adhesive is preferably applied over the full area to the carrier.

Provided on the adhesive coating of the carrier there may be at least one stripe of a covering, extending in the longitudinal direction of the adhesive tape and covering between 20 % and 90 % of the adhesive coating.

The stripe preferably covers in total between 50 % and 80 % of the adhesive coating. The degree of coverage is selected according to the application and to the diameter of the cable harness. The percentage figures indicated relate to the width of the stripes of the covering in relation to the width of the carrier.

In accordance with one preferred embodiment of the invention there is exactly one stripe of the covering present on the adhesive coating.

The position of the stripe on the adhesive coating is freely selectable, with preference being given to an arrangement directly at one of the longitudinal edges of the carrier. In this way an adhesive stripe is produced which extends in the longitudinal direction of the adhesive tape and finishes at the other longitudinal edge of the carrier. Where the adhesive tape is used for jacketing a cable loom, by the adhesive tape being passed in a helicoidal movement around the cable loom, the wrapping of the cable loom may be accomplished by bonding the adhesive of the adhesive tape only to the adhesive tape itself, with the substrate not coming into contact with any adhesive.

The cable loom jacketed in this way has a very high flexibility, as a result of the absence of fixing of the cable by any adhesive. Consequently, the flexibility of said cable loom on installation - particularly in narrow passages or sharp bends - is significantly increased.

If a certain degree of fixing of the adhesive tape on the substrate is desired, the jacketing may be accomplished

by bonding part of the adhesive stripe to the adhesive tape itself and another part to the substrate.

In accordance with another advantageous embodiment, the stripe is applied centrally on the adhesive coating, thereby producing two adhesive stripes extending on the longitudinal edges of the carrier in the longitudinal direction of the adhesive tape.

For the secure and economic application of the adhesive tape in said helicoidal movement around the cable loom, and to counter the slipping of the resultant protective wrapping, the two adhesive stripes each present on the longitudinal edges of the adhesive tape are advantageous, especially if one stripe, which is usually narrower than the second stripe, serves as a fixing aid and the second, broader stripe serves as a fastener. In this way, the adhesive tape is bonded to the cable in such a way that the cable loom is secured against slipping but is nevertheless of flexible design.

In addition, there are embodiments in which more than one stripe of the covering is applied to the adhesive coating. Where reference is made only to one stripe, the skilled person reads this, conceptually, as accommodating the possibility that there may well be two or more stripes covering the adhesive coating at the same time.

The procedure for producing the adhesive tape of the invention involves nothing more than the coating of the carrier directly with the dispersion in one or more operations carried out in succession. In the case of textile carriers, the untreated textile can be coated directly or by a transfer process. Alternatively, the textile may be pretreated with a coating (using any desired film-forming substance from solution, dispersion, melt and/or radiation-curing), before then being provided, in a downstream operation, directly or by a transfer process, with the PSA.

Application assemblies used are the customary ones: wire doctor, coating bar, roll application, nozzle coating, twin-chamber doctor blade, multiple cascade die.

The pressure sensitive adhesive composition may be applied directly onto the support substrate and allowed to dry to form a pressure sensitive adhesive layer. Alternatively, the pressure sensitive adhesive composition may be applied onto a highly releasable surface, e.g., a release liner's surface, agent-treated back face of a support layer, and allowed to dry to form a PSA layer on the surface, and the pressure sensitive adhesive layer is transferred to a support substrate. The pressure sensitive adhesive layer can be applied with any known method and commonly used coater, such as a gravure coater, reverse roll coater, kiss roll coater, dip roll coater, bar coater, knife coater, spray coater, curtain coater and the like. The pressure sensitive adhesive layer of the present invention is typically formed continuously. Depending on the purpose and application, the pressure sensitive adhesive layer may be formed in a regular or random pattern of dots, stripes, and the like.

On the basis of the positive properties outlined, the adhesive tape can be used outstandingly for insulating and wrapping wires or cables.

Furthermore, it is advantageously suitable for the jacketing of elongate items such as, more particularly, cable harnesses in motor vehicles, with the adhesive tape being passed in a helical line around the elongate item, or the elongate item being wrapped in axial direction by the tape.

Lastly, the concept of the invention also embraces an elongate item jacketed with an adhesive tape of the invention. The elongate material is preferably a cable harness.

On account of the outstanding suitability of the adhesive tape, it can be used in a jacket that consists of a covering, where, at least in one edge region of the covering, the self-adhesive tape is present, and is bonded on the covering in such a way that the adhesive tape extends over one of the longitudinal edges of the covering, and preferably in an edge region which is narrow by comparison with the width of the covering.

One such product and also optimized embodiments thereof are disclosed in EP 1 312 097 A1. EP 1 300 452 A2, DE 102 29 527 A1 and WO 2006 108 871 A1 show ongoing developments for which the adhesive tape of the invention is likewise very suitable. The adhesive tape of the invention may also find use in a method of the kind disclosed by EP 1 367 608 A2.

Finally, EP 1 315 781 A1 and DE 103 29 994 A1 describe embodiments of adhesive tapes of a kind also possible for the adhesive tape of the invention.

Likewise embraced by the inventive concept is a jacketed elongate item, such as in particular a cable harness, jacketed with an adhesive tape of the invention, and also a vehicle comprising an elongate item jacketed in this way.

According to one embodiment of the invention, the elongate item is a cable run which comprises a bundle of a plurality of cables such as 3 to 1000 cables, preferably 10 to 500 cables, more particularly between 50 and 300 cables.

The purpose of the text below is to illustrate the adhesive tape in more detail using a number of figures, without wishing thereby to bring about any restriction of whatever kind.

Figure 1 shows the adhesive tape in a lateral section,

Figure 2 shows a detail of a cable loom which is composed of a bundle of individual cables and is jacketed with the adhesive tape of the invention, and

Figure 3 shows an advantageous application of the adhesive tape.

Shown in Figure 1, in a section in the cross direction (transverse section), is the adhesive tape, consisting of a woven fabric carrier 1, one side of which bears an applied layer of a self-adhesive coating 2, based on an acrylate dispersion.

The adhesive has been absorbed to an extent of 20 % into the carrier, thus resulting in optimum anchoring and at the same time improving the manual tearability of the carrier.

Figure 2 shows a detail of a cable loom which is composed of a bundle of individual cables 7 and is jacketed with the adhesive tape 11 of the invention. The adhesive tape is passed in a helicoidal movement around the cable loom.

The detail of the cable loom shown has two turns I and II of the adhesive tape. Further turns would extend towards the left, but are not shown here.

In a further embodiment for jacketing, two tapes 60, 70 of the invention, furnished with an adhesive, are laminated with their adhesives at an offset (preferably by 50 % in each case) to one another, producing a product as shown in Figure 3.

**Assessment criteria**

The criteria for an application-compatible adhesive tape for the wrapping of cables are

- peel adhesion to backing according to LV 312
- flagging resistance according to the SWAT method and the TFT method
- cable compatibility for cables having T2 PVC insulation according to LV 312

**Procedure of the tests**

Unless expressly stated otherwise, the measurements are carried out under test conditions of 23 ± 1 °C and 50 ± 5 % relative humidity.

*Measurement of peel adhesion to backing according to LV 312*

The peel adhesion to backing ("KK Backing") is measured according to LV 312. Values of < 4 N/cm respectively of > 6 N/cm are not acceptable; values from 4 to 6 N/cm are in accordance with the invention.

*Measurement of flagging resistance according to the SWAT method*

The SWAT test is utilized in order to investigate the flagging behaviour of adhesive tapes after they have been wound spirally around cable.

The test is carried out under standard conditions (23 ± 1 °C and 50 ± 5 % relative humidity) and at 40 °C. The elevated temperature simulates the more difficult requirements during transport.

The test uses an adhesive tape 19 mm wide. It is wound manually around a cable sheathed with ETFE (ethylene-tetrafluoroethylene) and having a diameter of 1 mm, four times (1440°) without additional pressure. Scissors are used to cut the adhesive tape.

A flag on average 5 mm long is assumed to remain unless the end of the adhesive tape is pressed down.

A total of seven wraps are produced around the cable.

The flags are measured with a ruler after three days, ten days and 30 days under standard conditions. This is shown by Figure 8. The absolute flagging value is computed by subtracting 5 mm from the flag length actually measured.

In Figure 8, therefore, the flagging value is 23 mm (28 mm - 5 mm).

The flagging value reported as the result is the result of the mean flagging values of the seven wraps. The test at 40 °C is carried out analogously in customary drying cabinets.

The adhesive tape of the invention is evaluated below at 40 °C in a drying cabinet by the SWAT method specified.

Here, a value of < 10 mm is deemed to be the lower limit of resistance to flagging.

Means < 5 mm receive a score of 2, means from 5 to 10 mm receive a score of 1, and means > 10 mm receive a score of 0.

*Measurement of flagging resistance according to LV 312 or TFT method (Threshold Flagging Time)*

For determining the flagging behaviour by the TFT method, a test is employed in which an additional flexural stress is generated by the application of the test specimens, prepared in a flat format, to a 1½" core. The combination of tensile load by a test weight and flexural stress causes flagging-like detachment of the adhesive tape starting from the bonded upper end, and ultimate failure by dropping of the test specimens (see Figure 4, which also shows the schematic construction).

The time in minutes before dropping is the result.

The critical parameters for the holding time of the test specimens are weight and temperature, the weight being selected such as to result in values of at least 100 minutes.

The cylindrically shaped test mandrel is a 1½" card core with an external diameter of 42 ± 2 mm, provided with a marking line 5 mm adjacent to the vertex line.

The adhesion base is the adhesive tape's own reverse face.

The manual roller has a weight of 2 kg.

The test weight is 1 kg.

The test conditions are 23 ± 1°C and 50 ± 5 % relative humidity, or 40 °C in the heating cabinet.

The test is carried out on strips of adhesive tape 19 mm wide. A strip with a length of 400 mm is adhered to release paper and cut to form three strips with a length of 100 mm each. This should be done using a fresh cutter blade. The reverse face must not be touched.

A small piece of card is adhered beneath one of the ends of each strip, and the assembly is perforated (see Figure 5).

The test strips are then individually bonded centrally to strips of the broader adhesion base (adhesive tape with a width 1½ times that of the adhesive tape under test), so that the small piece of card still overlaps just (2 to 3 mm) at the end (see Figure 6).

The test specimens are rolled down using the 2 kg manual roller at a rate of 10 m/min in 3 cycles.

The finished test samples, in other words the test strips together with adhesion base, are then adhered to the card core in such a way that the upper end of the test specimen overlaps the vertex point by 5 mm (see Figure 7). In this operation, only the adhesion base, and not the test specimen, must be pressed on.

The test specimens fully prepared are left for 20 ± 4 hours without weight loading in a controlled-climate chamber at 40 °C.

Weights with a mass of one kilogram are then hung onto the specimens, and the stopwatches are started.

The measurement ends after failure of all three test specimens of one sample.

The median of the three individual measurements is reported in minutes.

The holding time is reported in minutes.

In this context, a TFT value of > 1200 minutes is considered to be a lower limit with regard to resistance to flagging.

Values below this receive a score of 0, values from ≥ 1200 to 2000 minutes receive a score of 1, values above 2000 minutes receive a score of 2. These gradations reflect increasing security against flagging.

*Measurement of cable compatibility for cables having T2-PVC insulation, based on LV 312 ("CC")*

The measurement is carried out in analogy to the measurement method specified in LV 312. The measurements are made in each case at 105 °C (T2).

*Embrittlement and Discoloration*

If there is no embrittlement after 3000 h at 105 °C on bending around a mandrel with a diameter of 2 mm and at the same time an absence of discolorations, or the incidence of marginal discolorations, after 3000 h at 105 °C, cable compatibility is considered to exist, and is given a score of "2". Clearly visible discolorations (without embrittlement) which are nevertheless not too dark may possibly be classed as sufficiently compatible and receive a score of "1".

If the sample undergoes embrittlement and/or black or dark brown discolorations (the original color is not visible anymore) can be seen, the specimen receives a score of "0".

*Dynamic Mechanical Analysis DMA*

The examples were characterized on their viscoelastic properties via Dynamic-mechanical analysis (DMA) on a dynamic mechanical analyzer MCR 302e, equipped with a Peltier temperature controlled lower plate (P-PTD 200, diameter 56 mm) and Peltier hood (H-PTD 200) (all commercially available from Anton Paar Group AG (Austria)) for a good temperature control. The specimen were prepared by diluting the dispersions to 40 % solid content and placing so much dispersion in a disc-shaped silicone mold with a diameter of 30 mm that after drying at ambient conditions (20 to 25 °C) for two days a film thickness of 0.6 to 0.8 mm was obtained. Film formation was completed by heating the dried sample in an oven at 80 °C for 5 hours and reconditioning for 24 h in standard climate conditions (temperature of 23 ±1 °C and a controlled relative humidity of 50 ± 5 %). A disc of 15 mm diameter was punched out of the sample film and placed between parallel plates with the upper plate having a diameter of 15 mm, carefully ensuring that complete contact is made between specimen and plates. A temperature sweep at a heating rate of 2 K/min starting from -40 up to 130 °C was recorded with constant angular frequency of 10 rad/s at a constant normal force of 1 N and a logarithmic

deformation ramp from 0.02 to 2 %.

*Measurement of peel adhesion according to ASTM D3330*

For measuring the peel adhesion of the pure dispersions, coated-out samples of the adhesives were prepared first of all. For this purpose, the dispersions were applied to a PET film (polyethylene terephthalate) with a thickness of 23 μm, and were drawn down using a film-drawing apparatus in such a way as to result, after drying for 5 minutes at 105 °C in a forced-air drying cabinet, in an adhesive coat weight of 30 g/m$^2$.
Using a cutter knife, strips 20 mm wide and 25 cm long were cut from this sheet.
The bond strength to steel was measured in accordance with ASTM D3330.

*Measurement* of *glass transition temperatures*

The glass transition temperatures were determined on the DSC 204 F1 "Phönix" Dynamic Differential Calorimeter from Netzsch, Germany, in 25 μl aluminium crucibles with a perforated lid, under a nitrogen atmosphere (20 ml/min gas flow rate). The initial sample mass was 8 ± 1 mg. The samples were subjected to measurement twice from -140 °C to 200 °C, with a heating rate of 10 K/min. The subject of analysis was the 2nd heating curve.
The method is based on DIN 53765.

**Examples**

*Outline of the examples*

The adhesive tape of the invention is described below in a preferred embodiment by means of examples, without wishing thereby to subject the invention to any restriction whatsoever.
In addition, comparative examples are given, which show unsuitable adhesive tapes.
To illustrate the invention, example adhesive tapes were produced according to the following scheme:

Preparation of pressure sensitive adhesive dispersion polymer

The pressure sensitive adhesive dispersion polymers were prepared by a free radical emulsion polymerization process combining an initial reactor charge and two reactant feeds. A double-wall 6-liter glass reactor connected to a cryostat enabling temperature control and equipped with a blade stirrer was charged with 800 g of deionized water and 40 g of a polymethyl methacrylate seed dispersion with 20 wt.-% solid content and an average particle size of 30 nm.
A monomer pre-emulsion was prepared consisting of 2.76 kg reactants (according to Table 1.1, Table 2.1 and Table 3.1), 22.8 g of anionic surfactant ($C_{13}$-$C_{15}$ alkyl aryl sulfonate) and 1.2 kg deionized water and treated a with dissolver disk over 5 min, obtaining a homogenous monomer emulsion. Furthermore, an initiator solution was prepared by dissolving 8 g of sodium persulfate in 72 g deionized water.
After the initial charge had been heated to 85 °C under agitation the monomer pre-emulsion and the initiator solution were continuously fed into the reactor over four hours. The reaction temperature was maintained constantly at 85 °C. The monomer inlet was finally flushed with 50 g of water. The batch was agitated further for another 30 min before cooling down to 60 °C. For the post-activation a 5 wt.-% solution of 2.5 g erythorbic acid was fed to the batch over one hour and a first shot of a 10 wt.-% solution of 1.1 g tert-butyl hydroperoxide was added with starting the erythorbic acid feed start and a second shot after 30 minutes.
The batch was then let cool down to ambient temperature (20-25 °C), neutralized with 10 wt.-% sodium hydroxide solution to pH 7.5, sieved through a 100 μm filter cloth.

Preparation of pressure sensitive adhesive formulation

If applicable, tackifier resin (Snowtack 100G ('ST100G'), Lawter) was mixed to the PSA dispersions in the amount as given in Table 1.1, Table 2.1 and Table 3.1. Afterwards, the PSA dispersions were adjusted, by stirred incorporation of a Hydrophobically modified Alkali Swellable Emulsion (HASE) associative thickener (RHEOBYK-HV 80, BYK-Chemie GmbH), to a viscosity of approximately 15 Pa*s at a shear rate of 10 $s^{-1}$ (measured using a coaxial cylinder geometry in rotation mode with a R180 viscosimeter (proRheo GmbH)).

Coating of pressure sensitive adhesive formulation

Using a film-drawing apparatus, a woven polyester fabric (linear fibre density 167 dtex, warp thread count 43

1/cm, weft thread count 25 1/cm) was coated with the thickened example PSA dispersion in such a way as to result, after drying in a forced-air oven at 105°C for 5 minutes, in an adhesive coat weight of 90 g/m$^2$.

Examples (E) and Counterexamples (CE)

*Table 1.1 Composition of counterexamples CE 1 to CE 7*

| | (a) | | (b) | | | (c) | | (d) | | | |
|---|---|---|---|---|---|---|---|---|---|---|---|
| | IEHA | BA | MMA | ACN | MA | Acid | Alcohol | CTA | VAC | resin | resin conc. [wt.-%] |
| CE 1 | 93 | - | - | 3 | - | 4 | - | - | - | - | - |
| CE 2 | 93 | - | - | 3 | - | 4 | - | - | - | ST100G | 27,9 |
| CE 3 | - | 98 | 0,5 | - | - | 1,5 | - | - | - | - | - |
| CE 4 | 41 | 41 | 8 | - | - | 2 | - | - | 8 | - | - |
| CE 5 | 41 | 41 | 8 | - | - | 2 | - | - | 8 | ST100G | 5 |
| CE 6 | 81 | - | 12 | - | 7 | - | - | - | - | - | - |
| CE 7 | 44 | 36 | 12 | - | - | 3 | - | - | 5 | - | - |

Table 1.2 Test results of counterexamples CE 1 to CE 7

| | tan delta maximum [°C] | tan delta @130°C | SWAT | TFT | CC PVC | KK Backing [N/cm] |
|---|---|---|---|---|---|---|
| CE 1 | -16 | 0,3 | 0 | 0 | 1 | 3,6 |
| CE 2 | -6 | 0,325 | 2 | 2 | 0 | 5,0 |
| CE 3 | -29 | 0,525 | 2 | 1 | 2 | 3,8 |
| CE 4 | -16 | 0,525 | 0 | 0 | 2 | 4,2 |
| CE 5 | -16 | 0,65 | 2 | 0 | 2 | 4,5 |
| CE 6 | -24 | 0,52 | 0 | 0 | 2 | 4,3 |
| CE 7 | -25 | 0,65 | 1 | 0 | 2 | 3,2 |

Table 2.1 Composition of examples E 1 to E 12

| | (a) | | (b) | | | (c) | | (d) | | | |
|---|---|---|---|---|---|---|---|---|---|---|---|
| | EHA | BA | MMA | ACN | MA | Acid | Alcohol | CTA | VAC | resin | resin conc. [wt.-%] |
| E 1 | - | 87,41 | 9,5 | - | - | 1 | 2 | 0,09 | - | - | - |
| E 2 | - | 88,405 | 8,5 | - | - | 1 | 2 | 0,095 | - | - | - |
| E 3 | - | 89,41 | 7,5 | - | - | 1 | 2 | 0,09 | - | - | - |
| E 4 | - | 86,9 | 10 | - | - | 1 | 2 | 0,1 | - | - | - |
| E 5 | - | 86,92 | 10 | - | - | 1 | 2 | 0,08 | - | - | - |
| E 6 | - | 84,93 | 12 | - | - | 1 | 2 | 0,07 | - | - | - |

(continued)

| | (a) | | (b) | | | (c) | | (d) | | | |
|---|---|---|---|---|---|---|---|---|---|---|---|
| | EHA | BA | MMA | ACN | MA | Acid | Alcohol | CTA | VAC | resin | resin conc. [wt.-%] |
| E 7 | - | 84,89 | 12 | - | - | 1 | 2 | 0,11 | - | - | - |
| E 8 | - | 82,9 | 14 | - | - | 1 | 2 | 0,1 | - | - | - |
| E 9 | - | 82,85 | 14 | - | - | 1 | 2 | 0,15 | - | - | - |
| E 10 | - | 87,41 | 9,5 | - | - | 1 | 2 | 0,09 | - | ST100G | 5 |
| E 11 | - | 90,89 | 6 | - | - | 1 | 2 | 0,11 | - | - | - |
| E 12 | - | 88,02 | 8,9 | - | - | 1 | 2 | 0,08 | - | - | - |

Table 2.2 Test results of examples E 1 to E 12

| | tan delta maximum [°C] | tan delta @130°C | SWAT | TFT | CC PVC | KK Backing [N/cm] |
|---|---|---|---|---|---|---|
| E 1 | -23 | 0,4 | 2 | 2 | 2 | 4,3 |
| E 2 | -23 | 0,4 | 2 | 2 | 2 | 4,7 |
| E 3 | -25 | 0,405 | 2 | 2 | 2 | 4,4 |
| E 4 | -21 | 0,405 | 2 | 2 | 2 | 4,0 |
| E 5 | -22 | 0,38 | 2 | 2 | 2 | 4,1 |
| E 6 | -19 | 0,41 | 2 | 2 | 2 | 4,1 |
| E 7 | -19 | 0,505 | 2 | 2 | 2 | 4,4 |
| E 8 | -17 | 0,47 | 2 | 2 | 2 | 4,0 |
| E 9 | -16 | 0,55 | 2 | 2 | 2 | 5,0 |
| E 10 | -18 | 0,45 | 2 | 2 | 2 | 5,8 |
| E 11 | -25 | 0,41 | 2 | 2 | 2 | 5,6 |
| E 12 | -24 | 0,385 | 2 | 2 | 2 | 4,3 |

Table 3.1 Composition of counterexamples CE 8 to CE 16

| | (a) | | (b) | | | (c) | | (d) | | | |
|---|---|---|---|---|---|---|---|---|---|---|---|
| | EHA | BA | MMA | ACN | MA | Acid | Alcohol | CTA | VAC | resin | resin conc. [wt.-%] |
| CE 8 | - | 91,0 | 6 | - | - | 1 | 2 | - | - | - | - |
| CE 9 | | 87,41 | 9,5 | | | 1 | 2 | 0,09 | | ST100G | 20 |
| CE 10 | - | 82,7 | 14 | - | - | 1 | 2 | 0,3 | - | - | - |
| CE 11 | - | 92,91 | 4 | - | - | 1 | 2 | 0,09 | - | - | - |
| CE 12 | - | 81,89 | 15 | - | - | 1 | 2 | 0,11 | - | - | - |
| CE 13 | - | 85,0 | 12 | - | - | 1 | 2 | - | - | - | - |

(continued)

| | (a) | | (b) | | | (c) | | (d) | | | |
|---|---|---|---|---|---|---|---|---|---|---|---|
| | EHA | BA | MMA | ACN | MA | Acid | Alcohol | CTA | VAC | resin | resin conc. [wt.-%] |
| **CE 14** | - | 79,0 | 18 | - | - | 1 | 2 | - | - | - | - |
| **CE 15** | - | 97,0 | - | - | - | 1 | 2 | - | - | - | - |
| **CE 16** | - | 90,91 | 6 | - | - | 1 | 2 | 0,09 | - | - | - |

Table 3.2 Test results of counterexamples CE 8 to CE 16

| | tan delta maximum [°C] | tan delta @130°C | SWAT | TFT | CC PVC | KK Backing [N/cm] |
|---|---|---|---|---|---|---|
| **CE 8** | -26 | 0,31 | 0 | 0 | 2 | 2,1 |
| **CE 9** | -13 | 0,475 | 2 | 2 | 0 | 7,3 |
| **CE 10** | -16 | 0,72 | 2 | 1 | 2 | 7,1 |
| **CE 11** | -28 | 0,37 | 0 | 0 | 2 | 5,1 |
| **CE 12** | -16 | 0,47 | 0 | 0 | 2 | 3,9 |
| **CE 13** | -19 | 0,34 | 0 | 0 | 2 | 2,3 |
| **CE 14** | -12 | 0,37 | 1 | 1 | 2 | 2,2 |
| **CE 15** | -27 | 0,45 | 0 | 0 | 2 | 3,2 |
| **CE 16** | -26 | 0,37 | 1 | 1 | 2 | 4,5 |

EHA 2-ethylhexyl acrylate
BA n-butyl acrylate
MMA methyl methacrylate
ACN acrylonitrile
MA methyl acrylate
Acid acrylic acid
Alcohol hydroxyethyl methacrylate
CTA chain transfer agent (n-dodecyl mercaptan)
VAC vinyl acetate

Tackifier Resin waterborne tackifier dispersion of rosin ester
(Snowtack 100G (Lawter))

The examples show that by using a low amount of chain transfer agent, both good SWAT and TFT properties can be achieved.

At the same time a good PVC cable compatibility is maintained. The adhesive tape does not destroy cables with PVC jacketing when an assembly composed of cables and adhesive tape is, in accordance with LV 312, stored for up to 3000 hours at temperatures above 105 °C and then the cables are bent around a mandrel. The adhesive tape of the invention exhibits nor cable embrittlement neither strong discolouration at 105 °C, over 3000 hours.

Furthermore, despite low tackifier concentration in the adhesive or even without tackifier addition at all, a high peel adhesion to backing and a moderately high unwinding force can be achieved, which is essential for the compactness of the winding during the manufacture of the wire harness.

## Claims

1. Adhesive tape in particular for wrapping cables, consisting of a preferably textile carrier and of a pressure sensitive adhesive, applied on at least one side of the carrier, in the form of a dried polymer dispersion, the polymer being

obtained by emulsion polymerization of a monomer mixture comprising:

(a) 80.75 to 94.89 wt.-%, preferably 83.85 to 93.73 wt.-% of one or more than one (meth)acrylic monomer(s) that individually yield(s) a homopolymer having a glass transition temperature ($T_g$) of -40 °C or less
(b) 5.00 to 14.00 wt.-%, preferably 6.00 to 12.00 wt.-% of one or more than one ethylenically unsaturated monomer(s) that individually yield(s) a homopolymer having a $T_g$ of 15 °C or higher
(c) 0.10 to 5.00 wt.-%, preferably 0.20 to 4.00 wt.-% of one or more than one ethylenically unsaturated monomer(s) having an acid and/or a hydroxyl functional group
(d) 0.01 to 0.25 wt.-%, preferably 0.07 to 0.15 wt.-% of a chain transfer agent

wherein monomers (a) to (d) are different from each other and the weight percentages is based on the total amount of monomers in the monomer mixture,
wherein the pressure sensitive adhesive dispersion polymer has a tanDelta maximum within a temperature range between -25 °C and -15 °C and
a tanDelta value at 130 °C between 0.38 and 0.55, wherein the tanDelta is determined by Dynamic Mechanical Analysis (DMA) at an angular frequency of 10 rad/s using a parallel plate tool.
and the pressure sensitive adhesive comprises 0.00 to 10.00, preferably 2.00 to 7.50 parts by weight of tackifiers (relative to 100 parts by weight of the pressure sensitive adhesive dispersion polymer).

**2.** Adhesive tape according to Claim 1,
**characterized in that**
the one or more than one (meth)acrylic monomer(s) (a) are selected from 2 ethylhexyl acrylate, n-butyl acrylate, 3-methylbutyl acrylate, hexyl acrylate, heptyl acrylate, octyl acrylate, nonyl acrylate, propyl acrylate, propylheptyl acrylate, heptadecyl acrylate, decyl methacrylate, dodecyl methacrylate, isodecyl methacrylate, octyl methacrylate, lauryl methacrylate, 2-methoxyethyl acrylate, 3-methoxypropyl acrylate, 3-ethoxypropyl acrylate, 3-methoxybutyl acrylate, hydroxybutyl acrylate, hydroxyethylcaprolactone acrylate, and combinations thereof, preferably from 2-ethylhexyl acrylate, n-butyl acrylate, and combinations thereof, more preferably n-butyl acrylate.

**3.** Adhesive tape according to either of Claims 1 and 2,
**characterized in that**
the one or more than one ethylenically unsaturated monomer(s) (b) are selected from acrylonitrile, 3,3,5-trimethylcyclohexyl acrylate, cyclohexyl acrylate, isobornyl acrylate, octadecyl acrylate, tert-butyl acrylate, 2-phenylethyl methacrylate, benzyl methacrylate, n-butyl methacrylate, cyclohexyl methacrylate, ethyl methacrylate, glycidyl methacrylate, hexadecyl methacrylate, isobornyl methacrylate, isobutyl methacrylate, isopropyl methacrylate, methyl methacrylate, neopentyl methacrylate, octadecyl methacrylate, propyl methacrylate, tert-butyl methacrylate, styrene, methoxy styrene, 2-methyl styrene, 3-methyl styrene, 4-ethyl styrene, 4-isopropyl styrene, 4-methoxy-2-methyl styrene, 4-methoxy styrene, 4-methyl styrene, 2-chloro styrene, 4-bromo styrene, 4-chloro styrene, 4-fluoro styrene, and combinations thereof, preferably from methyl methacrylate, n-butyl methacrylate, styrene and combinations thereof, more preferably methyl methacrylate.

**4.** Adhesive tape according to at least one of Claims 1 to 3,
**characterized in that**
the one or more than one ethylenically unsaturated monomer(s) having an acid functional group (c) are selected from ethylenically unsaturated carboxylic acid monomers, ethylenically unsaturated sulfonic acid monomers, ethylenically unsaturated phosphorous-containing acid monomers, preferably from (meth)acrylic acid, crotonic acid, fumaric acid, itaconic acid, maleic acid, maleic anhydride, vinyl acetic acid, vinyl lactic acid, vinyl sulfonic acid, styrene sulfonic acid, 2-carboxy ethyl (meth)acrylate, vinyl sulfonic acid, phenyl vinyl sulfonate, sodium 4-vinylbenzene sulfonate, 2-methyl-2-propene-1-sulfonic acid, 4-styrenesulfonic acid, 2-acrylamido-2-methyl-1-propane sulfonic acid, vinyl phosphonic acid, dimethyl vinyl phosphonate, diethyl vinyl phosphonate, diethyl allyl phosphonate, allyl phosphonic acid, and combinations thereof, more preferably from (meth)acrylic acid.

**5.** Adhesive tape according to at least one of Claims 1 to 3,
**characterized in that**
the one or more than one ethylenically unsaturated monomer(s) having a hydroxyl functional group (c) are selected from allyl alcohol, vinyl alcohol, N- methylolacrylamide, 1-penten-3-ol, hydroxyalkyl esters of ethylenically unsaturated acids, such as hydroxyethyl (meth)acrylate, hydroxypropyl (meth)acrylate, hydroxybutyl (meth)acrylate and hydroxyethylcaprolactone acrylate, and combinations thereof, preferably hydroxyalkyl esters of ethylenically unsaturated acids, such as hydroxyethyl (meth)acrylate, hydroxypropyl (meth)acrylate, hydroxybutyl (meth)acrylate

and hydroxyethylcaprolactone acrylate, more preferably hydroxyethyl (meth)acrylate, hydroxypropyl (meth)acrylate, hydroxybutyl (meth)acrylate, and combinations thereof, more preferably hydroxyethyl methacrylate.

**6.** Adhesive tape according to at least one of the preceding claims,
**characterized in that**
the chain transfer agent (d) is selected from n-dodecyl mercaptan, carbon tetrachloride, carbon tetrabromide, bromotrichloro methane, 4-methyl benzenethiol, isooctyl 3-mercaptopropionate, tert-nonyl mercaptan, 4,4'-thiobis benzenethiol, tert- dodecyl mercaptan, alpha-methyl styrene dimer, thioglycolic acid, 2-ethylhexyl thioglycolate, butyl 3-mercaptopropionate, 1,8-dimercapto-3,6-dioxa octane and combinations thereof, preferably n-dodecyl mercaptan.

**7.** Adhesive tape according to at least one of the preceding claims,
**characterized in that**
the composition of the polymer is as follows:

(a) 80.75 to 94.89 wt.-%, preferably 83.85 to 93.73 wt.-% of n-butyl acrylate
(b) 5.00 to 14.00 wt.-%, preferably 6.00 to 12.00 wt.-% of methyl methacrylate
(c) 0.10 to 5.00 wt.-%, preferably 0.20 to 4.00 wt.-% of acrylic acid and (hydroxyethyl)methacrylate
(d) 0.01 to 0.25 wt.-%, preferably 0.07 to 0.15 wt.-% of a chain transfer agent like n-dodecyl mercaptan

**8.** Adhesive tape according to at least one of the preceding claims,
**characterized in that**
the pressure sensitive adhesive has a peel adhesion on steel of at least 2.0 N/cm according to ASTM D3330 (for an adhesive coat weight of 30 $g/m^2$ on a 23 $\mu$m polyester film carrier).

**9.** Adhesive tape according to at least one of the preceding claims,
**characterized in that**
the carrier is a textile carrier, preferably a nonwoven material or a woven fabric, more particularly a woven polyester fabric.

**10.** Adhesive tape according to at least one of the preceding claims,
**characterized in that**
the carrier is woven fabric, preferably a woven polyester fabric, and more preferably has a construction as follows:

- the thread count in the warp is 10 to 60/cm
- the thread count in the weft is 10 to 40/cm
- the warp threads possess a yarn weight of between 40 and 400 dtex, more particularly between 44 and 330 dtex, very preferably of 167 dtex
- the weft threads possess a yarn weight of between 40 and 660 dtex, more preferably between 44 and 400 dtex, very preferably of 167 dtex.

**11.** Adhesive tape according to at least one of the preceding claims,
**characterized in that**
the textile carrier, preferably a nonwoven, has been provided on the underside with an applied film (film between textile carrier and adhesive).

**12.** Use of an adhesive tape according to at least one of the preceding claims for jacketing an elongate item, the adhesive tape being led in a helical line around the elongate item.

**13.** Use of an adhesive tape according to at least one of the preceding claims for jacketing an elongate item, the elongate item being enveloped in the axial direction by the tape.

**14.** Elongate item, such as in particular a cable harness, jacketed with an adhesive tape according to at least one of the preceding claims.

**15.** Vehicle comprising a jacketed elongate item according to Claim 14.

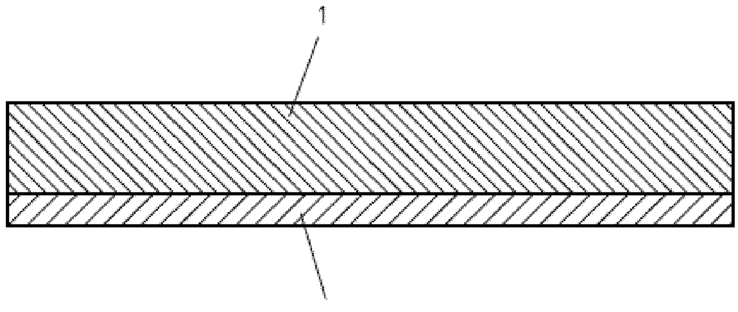


FIG.1

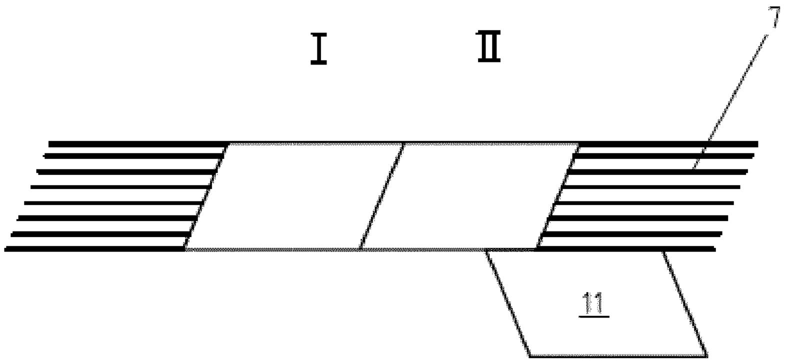


Fig. 2

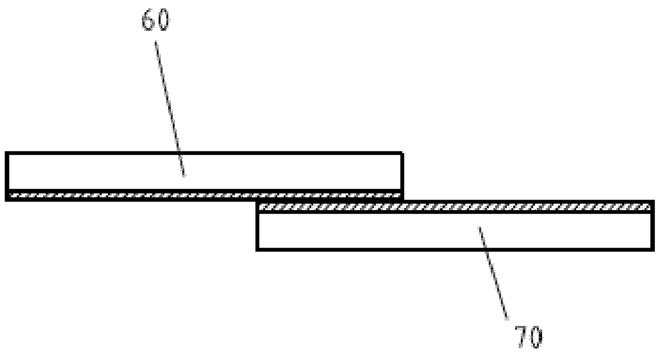


Fig. 3

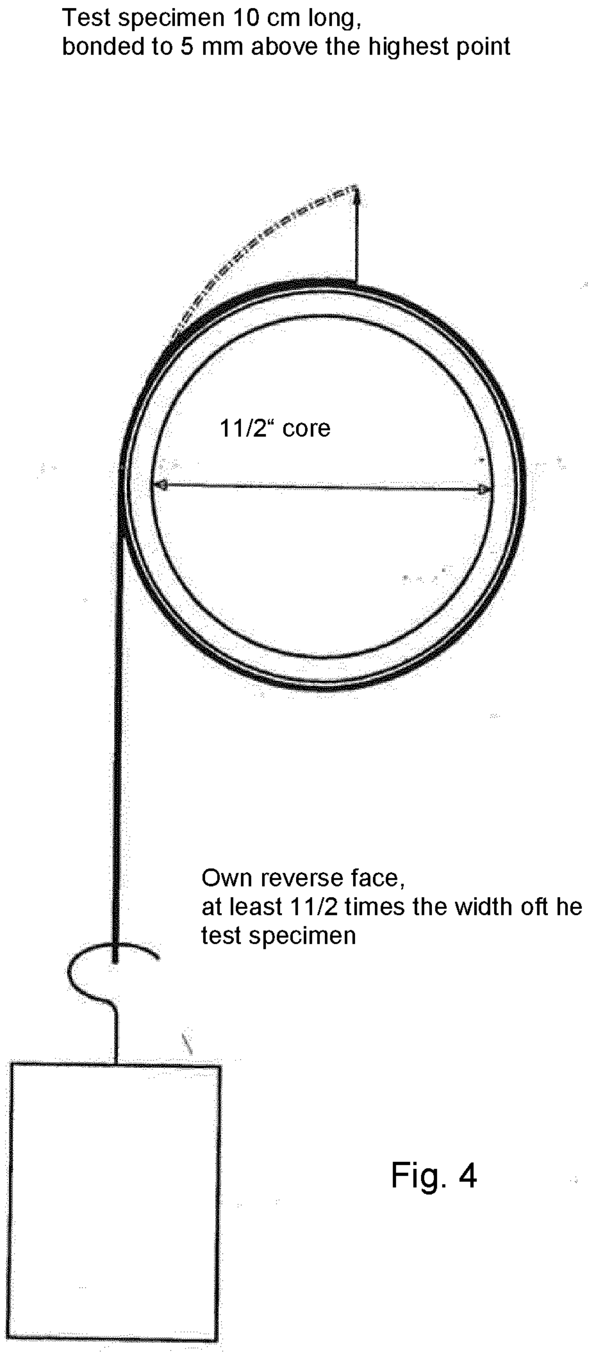
Test specimen 10 cm long,
bonded to 5 mm above the highest point
11/2“ core
Own reverse face,
at least 11/2 times the width oft he
test specimen

Fig. 4

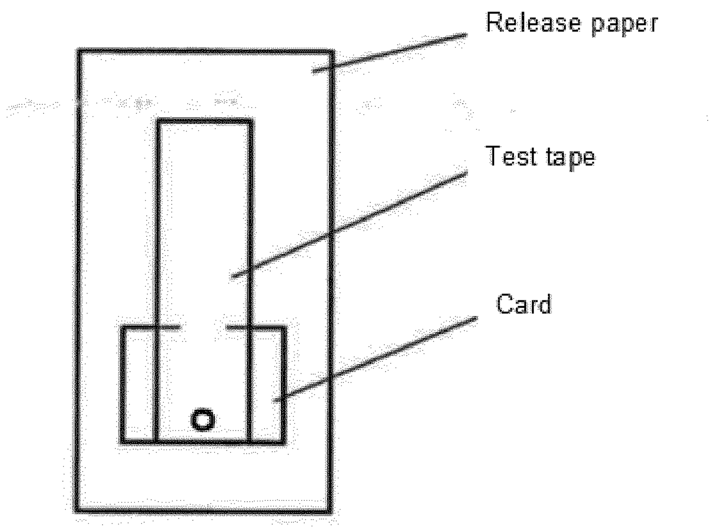
Release paper
Test tape
Card

Fig. 5

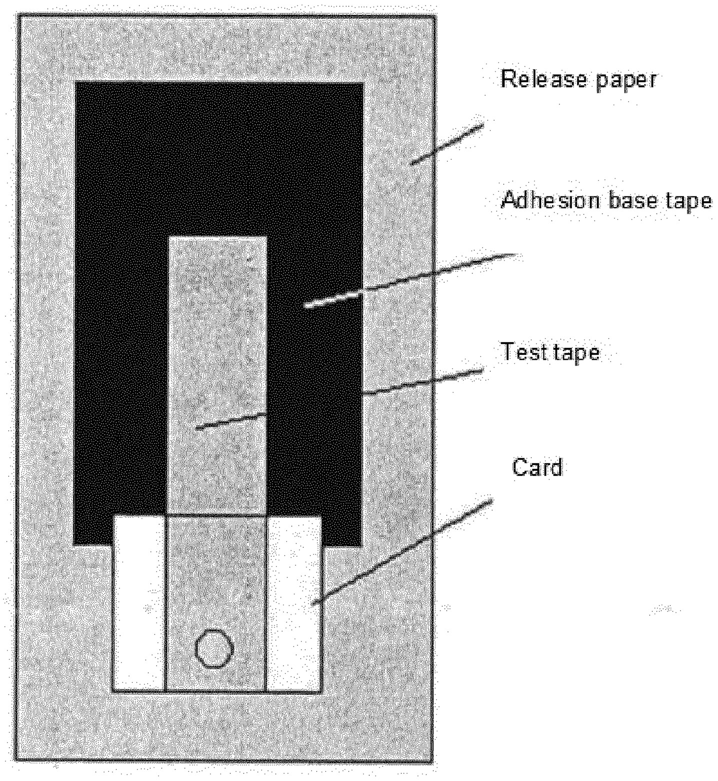
Release paper
Adhesion base tape
Test tape
Card

Fig. 6

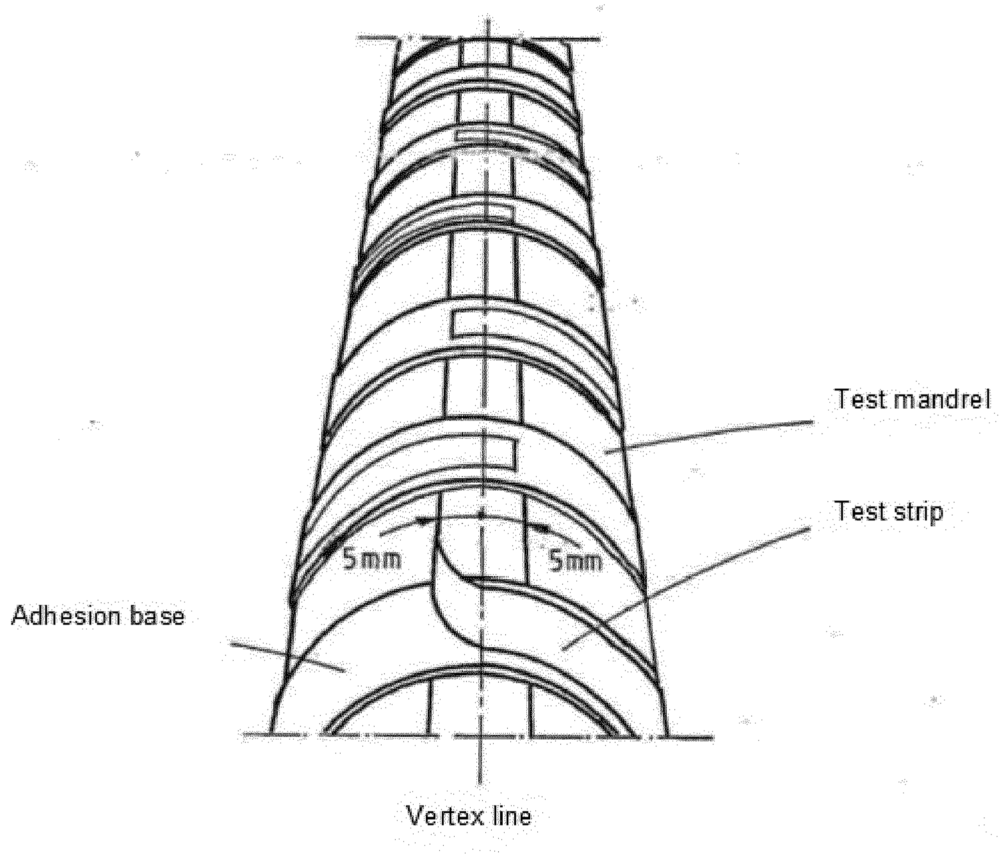
Test mandrel
Test strip
5mm
5mm
Adhesion base
Vertex line

Fig. 7

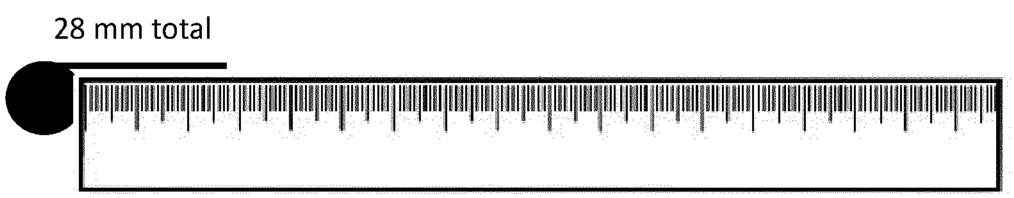
28 mm total

Fig. 8

Europäisches Patentamt
European Patent Office
Office européen des brevets

# EUROPEAN SEARCH REPORT

Application Number
EP 22 17 0305

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2022/119684 A1 (SAIJA LEO MARIO [IT] ET AL) 21 April 2022 (2022-04-21)<br>* paragraphs [0001], [0050], [0062], [0063], [0065]; examples; tables * | 1-6,8<br>7,9-15 | INV.<br>C09J7/21 |
| X<br>Y | US 2021/155834 A1 (GERST MATTHIAS [DE] ET AL) 27 May 2021 (2021-05-27)<br>* paragraphs [0001], [0038], [0039], [0054] - [0057], [0108], [0114]; claims; examples * | 1-4,6,8<br>7,12-15 | |
| Y | US 2021/040355 A1 (HÄNLE MARK [DE] ET AL) 11 February 2021 (2021-02-11)<br>* paragraphs [0208], [0210]; claims; examples; tables * | 7,9-15 | |

TECHNICAL FIELDS SEARCHED (IPC)

C09J

The present search report has been drawn up for all claims

| Place of search | Date of completion of the search | Examiner |
|---|---|---|
| Munich | 7 September 2022 | Kahl, Philipp |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 17 0305

This annex lists the patent family members relating to the patent documents cited in the above-mentioned European search report. The members are as contained in the European Patent Office EDP file on
The European Patent Office is in no way liable for these particulars which are merely given for the purpose of information.

07-09-2022

| Patent document cited in search report | Publication date | Patent family member(s) | Publication date |
|---|---|---|---|
| US 2022119684 A1 | 21-04-2022 | BR 112021008097 A2 | 03-08-2021 |
| | | CA 3119209 A1 | 22-05-2021 |
| | | CL 2021001247 A1 | 29-10-2021 |
| | | CN 113056537 A | 29-06-2021 |
| | | EP 3653681 A1 | 20-05-2020 |
| | | EP 3880763 A1 | 22-09-2021 |
| | | TW 202024143 A | 01-07-2020 |
| | | US 2022119684 A1 | 21-04-2022 |
| | | WO 2020099459 A1 | 22-05-2020 |
| US 2021155834 A1 | 27-05-2021 | CN 112004878 A | 27-11-2020 |
| | | EP 3781622 A1 | 24-02-2021 |
| | | US 2021155834 A1 | 27-05-2021 |
| | | WO 2019201696 A1 | 24-10-2019 |
| US 2021040355 A1 | 11-02-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1848006 A2
- DE 102013213726 A1
- EP 2497805 A1
- EP 1378527 B1
- WO 2015004190 A1
- EP 0071212 B1
- EP 1448744 A1
- EP 1312097 A1
- EP 1300452 A2
- DE 10229527 A1
- WO 2006108871 A1
- EP 1367608 A2
- EP 1315781 A1
- DE 10329994 A1


### Non-patent literature cited in the description


- **PETER A. LOVELL ; MOHAMED S. EL-AASSER.** Emulsion Polymerization and Emulsion Polymers. Wiley-VCH, 1997
- **T.G. FOX.** *Bull. Am. Phys. Soc.,* 1956, vol. 1, 123
- Vliesstoffe. Georg Thieme Verlag, 1982
- Textiltechnik-Vliesstofferzeugung. Arbeitgeberkreis Gesamttextil, 1996